# EUROPÄISCHE PATENTSCHRIFT

(11) **EP 2 821 353 B1**
(45) Veröffentlichungstag und Bekanntmachung des Hinweises auf die Patenterteilung: **28.10.2020**
(21) Anmeldenummer: 14172532.5
(22) Anmeldetag: 16.06.2014
(51) Int. Cl.: B65G 21/20

(54) **Transportabschnitt einer Horizontalfördereinrichtung mit mindestens einem verstellbaren Führungselement**
Conveyor section of a horizontal conveyor with at least one adjustable guide element
Section de transport d'un dispositif de convoyage horizontal ayant au moins un élément de guidage réglable

(30) Priorität: 04.07.2013 DE 102013107038
(43) Veröffentlichungstag der Anmeldung: 07.01.2015
(73) Patentinhaber: Krones Aktiengesellschaft, 93073 Neutraubling (DE)
(72) Erfinder: Hüttner, Johann, 93073 Neutraubling (DE); Seger, Martin, 93073 Neutraubling (DE); Mühlstein, Peter, 93073 Neutraubling (DE)
(74) Vertreter: Benninger, Johannes

(56) Entgegenhaltungen:
- EP-A2- 0 962 406
- US-A- 5 211 280
- US-A1- 2011 079 493
- US-B2- 8 464 864

## Beschreibung

Die vorliegende Erfindung betrifft einen Transportabschnitt einer Horizontalfördereinrichtung mit mindestens einem verstellbaren Führungselement mit den Merkmalen des unabhängigen Anspruchs 1.

Aus dem Stand der Technik sind bereits unterschiedliche Ausführungsvarianten von Transportabschnitten bekannt, die dazu vorgesehen sind, Artikel von einer ersten Bearbeitungsmaschine in Richtung zu einer weiteren Bearbeitungsmaschine zu befördern. Auch können Transportabschnitte dazu vorgesehen sein, Artikel aus einer Bearbeitungsmaschine abzuführen, Artikel einer Bearbeitungsmaschine zuzuführen oder von einem Standort zu einem weiteren Standort zu transportieren bzw. zu befördern. Während ihrer Beförderung über den Transportabschnitt werden die jeweiligen Artikel bewegt und hierbei entlang eines gewünschten Transportpfades gelenkt. Hierzu sind häufig ein oder mehrere Führungselemente vorhanden, die dem Transportpfad folgen und an denen die Artikel vorbeigeführt werden.

Derartige Führungs- oder Leitelemente können bspw. durch Stangen, Bleche o. dgl. ausgebildet sein. Die jeweils beförderten Artikel stehen während ihrer Bewegung in Oberflächenkontakt mit den Führungselementen und werden durch die Führungselemente in ihren Bahnen gelenkt. Um einen Artikelstau und/oder eine Desorientierung der Artikel zu verhindern, können die jeweiligen Artikel bei Beförderung an den Führungselementen mit möglichst geringer Reibung entlang gleiten.

Zusätzlich zur Lenkung der Artikel sind die Führungselemente dazu vorgesehen, Instabilitäten während des Transportes der Artikel zu vermeiden. Aus dem Stand der Technik sind hierzu Führungselemente bekannt, welche sich vertikal erstrecken, um bei Führung der Artikel über den Transportabschnitt mit den Artikeln flächig in Kontakt treten zu können und hiermit eine stabile Förderung zu gewährleisten.

Sollen Artikel mit einer ersten Geometrie und nachfolgend bzw. zu einem anderen Zeitpunkt Artikel mit einer davon abweichenden zweiten Geometrie den Transportabschnitt passieren, so ist zu deren stabilen Führung ein Anpassen der Position des oder der jeweiligen Führungselemente notwendig. Insbesondere können solche Anpassungsvorgänge notwendig sein, wenn zunächst Behälter mit einem ersten Füllvolumen transportiert werden sollen und anschließend Behälter mit einem zweiten Füllvolumen, die sich jeweils in ihren Außenkonturen und/oder Außenabmessungen unterscheiden.

Die Position der Führungselemente muss bei solchen Verstellvorgängen derart angepasst werden, dass der Abstand zwischen zwei Führungselementen etwas mehr als die Artikelbreite bzw. die Artikelhöhe beträgt, so dass die Artikel ohne zu Klemmen zwischen den jeweiligen Führungselementen über den Transportabschnitt geführt werden können. Weiter muss hinsichtlich des Abstandes gewährleistet werden können, dass die Artikel nicht kippen und definierte Bahnen im Transportabschnitt möglichst exakt eingehalten werden. Diese Anforderungen erfordern eine sehr genaue Einstellung von Positionen der jeweiligen Führungselemente.

Im Stand der Technik kann die Anpassung der Position erfolgen, indem das oder die jeweiligen Führungselemente manuell verstellt oder versetzt werden. Ein solcher manuell durchzuführender Verstellvorgang oder ein manuelles Versetzen von Führungs- oder Leitelementen, ggf. unter Zuhilfenahme von Werkzeug, ist umständlich und mit hohem Zeitaufwand verbunden, weshalb alternative Mechanismen entwickelt wurden, um die Neupositionierung zu vereinfachen. So sind aus dem Stand der Technik u.a. Scherengeländer oder Exzenterscheiben zur Verstellung bekannt.

Eine weitere Möglichkeit, bei welcher das Verstellen von Führungselementen unter Zuhilfenahme einer Kurbel erfolgt, ist in der US 5 211 280 A offenbart. Bei dieser Stelleinrichtung wird die Drehbewegung einer durch eine Handkurbel angetriebenen Welle auf eine Zahnstange übertragen, welche das jeweilige Führungselement bewegt. Weiter ist ein Drehknauf zur Fixierung einer erreichten Position beschrieben, mit welchem das Führungselement in der jeweiligen Position festgesetzt werden kann. Soll ein erneutes Verstellen des Führungselementes erfolgen, wird der Drehknauf und damit die Klemmung gelöst und anschließend die Handkurbel zum Verstellen der Führungselemente betätigt. Die Zahnstange ist bei dieser bekannten Vorrichtung direkt mit einer Welle gekoppelt, die eine Außenverzahnung zum kämmenden Eingriff mit der Zahnstange trägt.

Bei der in der US 5 211 280 A gezeigten Direktübertragung des Drehmomentes von der Antriebswelle mit Außenverzahnung auf die Zahnstange kann es zu einer zu weiten oder zu geringen Verstellung des oder der jeweiligen Führungselemente kommen. Insbesondere bei manueller Einstellung arbeitet ein derartiger Verstellmechanismus nur mit begrenzter Exaktheit, so dass unter ungünstigen Umständen keine ausreichend maßhaltigen Verstellvorgänge der jeweiligen Führungselemente durchführbar sind, so dass die benötigten exakten Positionen für die Führungs- oder Leitelemente nicht zu gewährleisten sind.

Weiterhin ist durch die US2011/0079493 A1 bereits eine Führungseinrichtung für Behältnisse mit verstellbaren Leitschienen bekannt. Die Führungseinrichtung bewegt zu befördernde Behältnisse mittels Förderbändern weiter. Zur Führung der Behältnisse sind Führungselemente angebracht. Die Führungseinrichtung umfasst verstellbare Seitenelemente, um die Führungselemente in der richtigen Position anzuordnen. Die Führungselemente sind mit Schienenelementen gekoppelt. Die Schienenelemente sind jeweils über ein Ritzel mit einer Antriebswelle verbunden.

Wünschenswert im Sinne der vorliegenden Erfindung sind dagegen Mechanismen, welche auf einfache Art und Weise eine weitgehend exakte Positionierung von Führungselementen bei ihrer Verstellung erlauben. In der Praxis ist weiterhin das Problem zu verzeichnen, dass die jeweiligen Führungselemente nach bestimmter Zeit Verschleiß- bzw. Abnutzungserscheinungen aufweisen, so dass eine Neujustierung der Führungselemente notwendig sein kann, um den Verschleiß- bzw. den Abnutzungserscheinungen entgegenzuwirken und die jeweiligen Artikel stabil und unter Anlage an den jeweiligen Führungselementen transportieren zu können. Auch für eine derartige Neujustierung sind Mechanismen notwendig, welche eine sehr genaue Feineinstellung der jeweiligen Position von Führungselementen erlauben.

Das vorrangige Ziel der vorliegenden Erfindung kann deshalb darin gesehen werden, einen Transportabschnitt zur Verfügung zu stellen, bei welchem die Position von Führungselementen möglichst exakt angepasst werden kann. Zudem besteht das Ziel der vorliegenden Erfindung darin, einen derartigen Transportabschnitt zur Verfügung zu stellen, bei welchem die Anpassung von Führungselementen auf einfache und unkomplizierte Art und Weise erfolgt.

Diese genannten Ziele werden durch einen Transportabschnitt erreicht, der die Merkmale des Patentanspruchs 1 umfasst. Weitere vorteilhafte Ausgestaltungen werden durch die Unteransprüche beschrieben.

Der erfindungsgemäße Transportabschnitt einer Horizontalfördereinrichtung ist ausgebildet zur Beförderung von Artikeln wie Flüssigkeitsbehälter oder Flaschen. Beispielsweise können die Artikel durch aus Vorformlingen streckgeblasene PET-Behälter und/oder durch Behälter aus Glas und/oder durch weitere Flüssigkeitsbehälter ausgebildet sein. Denkbar ist zudem, dass die Artikel bzw. die Flüssigkeitsbehälter oder Flaschen den Transportabschnitt in Gebindeformation passieren. Davon abgesehen eignet sich der erfindungsgemäße Transportabschnitt zudem zur Beförderung von weiteren Artikeln, wie Stückgütern o. dgl. Es sei deshalb an dieser Stelle ausdrücklich klargestellt, dass der im vorliegenden Zusammenhang verwendete Begriff der Artikel umfassend zu verstehen ist und sich sowohl auf einzelne Behälter, Gegenstände oder Stückgüter beziehen kann als auch auf Pakete, Gebinde oder sonstige Artikelzusammenstellungen, die mit der Horizontalfördereinrichtung entlang eines vorgegebenen Transportweges befördert werden.

Die Artikel werden stehend oder hängend auf einer sich in horizontaler Förderrichtung erstreckenden Transportauflage zwischen zwei ungefähr parallel angeordneten Führungselementen bewegt. Diese Führungselemente stehen dabei in einem Abstand zueinander, der mindestens der Artikel- oder Behälterbreite entsprechen muss, damit diese sich nicht zwischen den ungefähr parallel entlang des Transportweges verlaufenden Führungselementen verklemmen können. Ggf. kann darüber hinaus vorgesehen sein, dass die beiden Führungselemente jeweils auf ihrer in Richtung der Artikel weisenden Seite ein Artikelführungsprofil aufweisen.

Die Artikel können wahlweise in einer Reihe hintereinander oder auch in mehreren parallelen Reihen hintereinander stehend bewegt werden. Werden die Artikel in mehreren Reihen bewegt, so kann es sein, dass die Artikel einer ersten der mehreren Reihen parallel zu Artikeln einer zweiten der mehreren Reihen bewegt werden. Die Erfindung ist jedoch nicht auf derartige Ausführungsformen beschränkt, so dass weiterhin vorgesehen sein kann, dass die Artikel bei Beförderung über den Transportabschnitt zumindest bereichsweise im Massenstrom bewegt werden, so dass keine exakte Folge mehrerer paralleler Reihen von hintereinander beförderten Artikeln vorhanden sein muss, sondern eine zumindest streckenweise ungeordnete Artikelfolge gegeben sein kann.

Weiterhin kann die Transportauflage feststehend ausgebildet sein. Die Artikel können hierbei entlang der Transportauflage gleiten. Die Transportauflage kann bei dieser Ausführungsform fest mit einem Maschinenrahmen und/oder einem Gestell des Transportabschnittes verbunden sein. Ein Maschinenrahmen und/oder Gestell kann eine Stütze oder mehrere Standbeine aufweisen, über welche sich der jeweilige Maschinenrahmen und/oder das Gestell auf einer Bodenfläche abstützen.

Es sei an dieser Stelle vorsorglich darauf hingewiesen, dass der Begriff der Horizontalfördereinrichtung umfassend dahingehend zu verstehen ist, dass diese Fördereinrichtung zumindest abschnittsweise eine Steigung oder ein Gefälle aufweisen kann. Sofern diese geneigten Abschnitte mit Steigungen und/oder Gefällen nicht dazu führen, dass die Artikel verrutschen oder nicht mehr in der gewünschten Ordnung transportiert werden können, stellen sie keine Einschränkung für die Funktion der vorliegenden Erfindung dar. Somit sollen auch Fördereinrichtungen, welche die Artikel über Höhendifferenzen führen, als Horizontalfördereinrichtungen im Sinne der vorliegenden Erfindungsdefinition verstanden und aufgefasst werden.

Zudem kann in weiteren Ausführungsformen vorgesehen sein, dass die Transportauflage als Bestandteil eines umlaufenden Transportbandes ausgebildet ist, auf dem die Artikel bzw. Behälter oder Flaschen aufstehen oder hängen, insbesondere sei hierbei ein Luftförderer genannt. Zudem existieren weitere Möglichkeiten zur Förderung der Artikel, wie beispielsweise eine Kettenführung mit umlaufend angeordneten Stützstäben, die dem Fachmann bekannt sind und nicht explizit erwähnt werden. Auch hinsichtlich dieser genannten Fördervarianten gilt das oben Gesagte, so dass diese wahlweise in horizontalem Verlauf oder mit geringen Steigungen oder Gefällen ausgebildet sein können.

Wie erwähnt und gemäß der vorliegenden Erfindung vorgesehen, sind zwei Führungselemente ungefähr parallel zueinander angeordnet.

Beide Führungselemente besitzen einen Abstand, der mindestens der Artikel- oder Behälterbreite entsprechen muss, damit diese mit geringem Spiel und ohne Klemmgefahr geführt sind. Bevorzugt wird ein Abstand gewählt, bei dem die Führungselemente um 2 bis 5 mm weiter als die Artikel- oder Behälterbreite ist. Vorstellbar sind hierbei Ausführungsformen, bei welchen ein einreihiger Strom an hintereinander stehend angeordneten Artikeln bzw. Behältern zwischen den beiden Führungselementen befördert wird. Der relative Abstand der beiden Führungselemente kann hierbei geringfügig größer als der maximale Artikel- bzw. Behälterdurchmesser ausgebildet sein, da ein geringes Spiel die exakte Führung der Artikel in keiner Weise beeinträchtigt. Bei manchen Artikeln wie bspw. bei PET-Behältern mit darin befindlichen Getränken kann es sogar notwendig sein, ein ausreichendes seitliches Spiel zwischen den Behältermantelflächen und den jeweiligen Führungselementen vorzusehen, da solche relativ dünnwandigen Behälter eine gewisse Nachgiebigkeit und Biegeweichheit aufweisen, was zu einer nicht exakt definierbaren Außenkontur und demzufolge zu einem notwendigen Führungsspiel zwischen den parallelen Führungs- oder Leitelementen führt.

In weiteren Ausführungsformen ist vorstellbar, dass zwischen den beiden Führungselementen eine Trenneinrichtung, wie beispielsweise eine Trennwand, ein oder mehrere Trennstäbe oder eine Art Gassenblech und/oder dergleichen angeordnet sind, die sich ungefähr parallel zu den beiden Führungselementen erstreckt. Hierbei können erste Artikel hintereinander stehend in Reihe zwischen der Trennwand und einem der beiden Führungselemente befördert werden. Weiter können zweite Artikel hintereinander stehend in Reihe zwischen der Trennwand und dem weiteren der beiden Führungselemente befördert werden. Eines der beiden Führungselemente oder beide Führungselemente können ggf. verstellbar ausgebildet sein. Die beiden Reihen sind hierbei parallel zueinander geführt. Der relative Abstand eines ersten der beiden Führungselemente zur Trenneinrichtung kann vergrößert oder verkleinert zum Abstand des weiteren der beiden Führungselemente zur Trenneinrichtung ausgebildet sein. Die ersten Artikel können gegenüber den weiteren Artikeln einen unterschiedlichen maximalen Artikel- bzw. Behälterdurchmesser aufweisen. Auch kann eine vorhergehende Sortierung der Artikel hinsichtlich ihres maximalen Artikeldurchmessers vor Eintritt in den Transportabschnitt erfolgen.

Weiter ist zumindest eines der beiden gegenüber liegend angeordneten Führungselemente über mehrere, an einem Maschinenrahmen oder Gestell verankerte Verstellelemente quer zur Förderrichtung in seinem Abstand zum anderen Führungselement verstellbar. Hierbei können wahlweise lediglich zwei Verstellelemente mit dem jeweiligen Führungselement in Verbindung gebracht sein, in bevorzugten Ausführungsformen sind jedoch für jedes der verstellbaren Führungselemente mehr als zwei Verstellelemente vorgesehen. Der Abstand der Verstellelemente zueinander entlang des Transportabschnittes liegt dabei bevorzugt zwischen 30 und 100 cm und besonders bevorzugt bei etwa 50 cm.

Die Verstellelemente sind über einen gemeinsamen Drehantrieb miteinander gekoppelt und annähernd synchronisiert. Eine Betätigung eines ersten der Verstellelemente kann zumindest annäherungsweise zeitgleich mit der Betätigung der jeweiligen weiteren Verstellelemente erfolgen. Das jeweilige Führungselement kann somit über sämtliche zugeordneten Verstellelemente zumindest annäherungsweise zeitgleich verstellt werden. Die Verstellelemente können zur Verstellung des Führungselementes zumindest annäherungsweise zeitsynchron betätigt werden.

Weiter ist vorstellbar, dass das Führungselement bei einer Verstellung über jedes der Verstellelemente mit einem definierten Verstellweg beaufschlagt wird. Der Verstellweg, mit dem die jeweiligen Verstellelemente das Führungselement bei Neupositionierung beaufschlagen, kann für jedes der Verstellelemente bei jeweiliger synchroner Betätigung identisch ausgebildet sein. Vorstellbar ist bspw., dass ein Drehantrieb manuell und mechanisch antreibbar ist. So kann der Drehantrieb bspw. als Handkurbel ausgebildet sein, die mit den jeweiligen Verstellelementen gekoppelt ist. In weiteren Ausführungsformen ist denkbar, dass ein Drehantrieb als Elektromotor, als Hydromotor und/oder als nahezu beliebig ausgebildeter Servomotor ausgebildet ist.

Weiterhin ist vorgesehen, dass jedes Verstellelement einen rotatorischen Antrieb des gemeinsamen Drehantriebs über eine oder mehrere Übersetzungsstufen auf eine lineare Stellbewegung des daran aufgehängten Führungselements überträgt. Die lineare Stellbewegung kann zumindest annäherungsweise parallel zur Transportauflage orientiert sein. Das verstellbare Führungselement kann beispielsweise über Schraubverbindungen, weiter über Rast- und/oder Schnapp- und/oder Klemmverbindungen mit den jeweiligen Verstellelementen in Verbindung stehen. Zudem existieren weitere bevorzugte Ausführungsformen für die Verbindung zwischen den jeweiligen Verstellelementen und dem zugeordnetem Führungselement, auf welche nachfolgend noch detailliert eingegangen wird.

Durch die Übersetzung kann bei Betätigung des Drehantriebs und hieraus resultierender linearer Stellbewegung der jeweiligen Verstellelemente eine sehr genaue Anpassung der jeweiligen Position des verstellbaren Führungselementes erfolgen. Je nach Ausgestaltung des Transportabschnittes und gewünschter Feinfühligkeit bei Anpassung sind bei diversen Ausführungsformen für vorliegende Erfindung eine Vielzahl von Übersetzungsstufen vorstellbar. Sinnvollerweise können die ein oder mehreren Übersetzungsstufen zumindest zwei gegensinnig drehende Zahnräder und/oder ein Welle mit Außenverzahnung und ein gegensinnig zur Welle drehendes und mit der Außenverzahnung der Welle kämmend in Eingriff stehendes Zahnrad umfassen. Die Drehfrequenz des antreibenden Zahnrades bzw. der antreibenden Welle mit Außenverzahnung kann hierbei vergrößert zur Drehzahl des abtreibenden Zahnrades ausgebildet sein.

Die ein oder mehreren Übersetzungsstufen der Verstellelemente umfassen jeweils mindestens ein an den Drehantrieb gekoppeltes und über den Drehantrieb rotierend antreibbares Antriebsmittel mit Außenverzahnung und erster Zahnzahl n1. Das Antriebsmittel kann, wie vorhergehend bereits erwähnt, als Zahnrad ausgebildet sein. Weiter ist vorstellbar, dass das Antriebsmittels als rotierende Welle mit Außenverzahnung ausgebildet ist. Auch kann das Antriebsmittel als Zahnrad ausgebildet sein, welches drehfest auf einer Antriebswelle aufsitzt.

Weiter ist vorgesehen, dass die ein oder mehreren Übersetzungsstufen der Verstellelemente zudem mindestens ein dem Antriebsmittel nachgeordnetes, drehendes und mit dem Antriebsmittel in kämmendem Eingriff stehendes Übertragungsmittel mit Außenverzahnung und zweiter Zahnzahl n2 umfasst. Das Verhältnis von erster Zahnzahl n1 des Antriebsmittels zu zweiter Zahnzahl n2 des Übertragungsmittels ist sinnvollerweise kleiner als 1 ausgebildet. Die zweite Zahnzahl n2 des Übertragungsmittels entspricht mindestens der 1,5-fachen Zahnzahl des Antriebsmittels. In der Praxis haben sich Ausführungsformen bewährt, bei welchen die zweite Zahnzahl n2 des Übertragungsmittels dem doppelten oder mehr als dem doppelten der ersten Zahnzahl n1 des Antriebsmittels entspricht.

Um die lineare Stellbewegung auf das verstellbare Führungselement zu übertragen, weisen die Verstellelemente jeweils wenigstens eine Zahnstange auf und die Übersetzungsstufen jeweils wenigstens ein als rotierendes Zahnrad ausgebildetes Abtriebsmittel, das zur linearen Stellbewegung der Zahnstange kämmend mit der wenigstens einen Zahnstange in Eingriff steht. Beispielsweise kann die Zahnstange direkt mit dem vorherig erwähnten Übertragungsmittel in Eingriff gebracht sein. Vorzugsweise besitzen die Zahnstangen der jeweiligen Verstellelemente eine Längserstreckung, welche im Wesentlichen parallel zur Transportauflage und senkrecht zum Verlauf des Führungselementes orientiert ist, so dass der Bewegungsverlauf der Zahnstangen und ihre Längserstreckungsrichtungen in einer ungefähr horizontalen Ebene liegen. Weiterhin kann vorgesehen sein, dass die Zahnstange nur in definierten Bereichen, jedoch nicht entlang ihrer gesamten Längserstreckung eine Verzahnung besitzt. Der Hub und Rückhub der Zahnstange bei linearer Stellbewegung kann hierdurch bedarfsweise begrenzt werden. Außerdem können mittels der Verzahnung der translatorisch beweglichen Zahnstange in definierten Bereichen Endlagen zur Verstellung vorgegeben werden.

In diversen Ausführungsformen kann vorgesehen sein, dass einem oder mehreren der Verstellelemente wenigstens zwei Zahnstangen zugeordnet sind, die bei Betätigung des Verstellelementes parallel und in entgegengesetzten Richtungen geführt werden. Jeweils eine der Zahnstangen kann zur Verstellung eines eigenen Führungselementes ausgebildet sein. Beide Zahnstangen können kämmend mit dem vorherig erwähnten und als Zahnrad ausgebildeten Abtriebsmittel in Eingriff stehen. Auf diese Weise können mit einem der Verstellelemente jeweils gegensinnige Zustellbewegungen der parallelen Führungselemente durchgeführt werden, da zwei parallel angeordnete Zahnstangen, die jeweils mit demselben Zahnrad kämmen, bei dessen Drehung jeweils gegensinnige translatorische Bewegungen ausführen. Die sich bewegenden Abschnitte der Zahnstangen müssen in diesem Fall ggf. über eine geeignete Gestängeumlenkung oder über eine geeignete Aufhängung mit den beweglichen Führungselementen verbunden werden, da die Zahnstangen in diesen Fällen oberhalb oder unterhalb des Bewegungsverlaufs der Artikel platziert werden müssen, um Kollisionen mit der Horizontalfördereinrichtung und/oder mit den Artikeln zu vermeiden.

Weiter sind das als rotierendes Zahnrad ausgebildete Abtriebsmittel und das Übertragungsmittel drehfest miteinander gekoppelt, wobei diese Teile eine gemeinsame Drehachse besitzen. Hierbei können das Übertragungsmittel und das drehfest mit dem Übertragungsmittel gekoppelte Abtriebsmittel drehfest auf einer gemeinsamen Welle sitzen bzw. integraler Teil dieser gemeinsamen Welle sein.

In diversen Ausführungsformen kann vorgesehen sein, dass mehrere Komponenten der Übersetzungsstufen, die miteinander in Eingriff gebracht sind, durch unterschiedliche Materialien ausgebildet sind. Wenigstens eine erste Komponente kann bspw. durch Kunststoff gebildet sein, während wenigstens eine mit der ersten Komponente in Eingriff stehende zweite Komponente durch Metall gebildet sein kann. Derartige Ausgestaltungen benötigen keine oder lediglich eine kleine Menge an Schmiermittel, um die Funktion der Übersetzungsstufen mit geringem Verschleiß gewährleisten zu können. Beispielsweise ist vorstellbar, dass das vorherig beschriebene Antriebsmittel durch Kunststoff ausgebildet ist und das mit dem Antriebsmittel in kämmendem Eingriff stehende Übertragungsmittel durch Metall ausgebildet. Auch kann das Antriebsmittel durch Metall ausgebildet sein und das mit dem Antriebsmittel in kämmendem Eingriff stehende Übertragungsmittel durch Kunststoff. In weiteren Ausführungsformen können mehrerer Übersetzungsstufen, die miteinander in Eingriff gebracht sind, durch unterschiedliche Kunststoffe ausgebildet sein. Diese Materialpaarungen können zweckmäßigerweise nach dem Kriterium der ausreichenden Selbstschmierung ausgewählt werden, da solche unterschiedlichen Materialen mit unterschiedlichen Härtegraden und unterschiedlichem Verschleißverhalten in vorteilhafter Weise miteinander kombiniert und in kämmendem Eingriff gebracht werden können, ohne dass zusätzliche Schmiermittel aufgebracht werden müssen. Sofern jedoch eine Schmierung von einzelnen Komponenten der Getriebestufen erforderlich ist, kann vorgesehen sein, dass hierzu Schmiermittel auf die Zahnstange aufgebracht wird und über die Zahnstange an weitere Komponenten der Getriebestufen weitergegeben wird.

Weiter kann vorgesehen sein, dass das wenigstens eine als rotierendes Zahnrad ausgebildete Abtriebsmittel eine dritte Zahnzahl n3 aufweist, die geringer als die Zahnzahl n1 des Antriebsmittels ausgebildet ist. Sinnvollerweise kann das als rotierende Zahnrad ausgebildete Abtriebsmittel eine dritte Zahnzahl n3 aufweisen, die geringer als die Zahnzahl n2 des Übertragungsmittels ausgebildet ist. Über das Übertragungsmittels und das als Zahnrad ausgebildete Abtriebsmittel mit geringerer Zahnzahl kann somit eine weitere Übersetzungsstufe bereitgestellt werden.

Hinsichtlich der ersten Zahnzahl n1 des Antriebsmittels, der zweiten Zahnzahl n2 des Übertragungsmittels und der dritten Zahnzahl n3 des als Zahnrad ausgebildeten Abtriebsmittel kann gelten: n3 < n1 < n2.

Da das als Zahnrad ausgebildete Abtriebsmittel drehfest mit dem Übertragungsmittel gekoppelt sein kann und hierzu ggf. eine gemeinsame Welle aufweist, können das als Zahnrad ausgebildete Abtriebsmittel sowie das Übertragungsmittel bei Verstellung eine identische Drehfrequenz besitzen. Aufgrund der Übersetzung ist hierbei die Drehfrequenz des Antriebsmittels vergrößert zur Drehfrequenz des Übertragungsmittels sowie des drehfest mit dem Übertragungsmittels gekoppelten Abtriebsmittels ausgebildet. Eine sehr feinfühlige Einstellung des jeweiligen verstellbaren Führungsmittels ist vermittels der vorgeschlagenen Übersetzungsstufen möglich.

Um die Übersetzungsstufen weitgehend vor Verunreinigungen zu schützen, kann vorgesehen sein, dass die Verstellelemente zur vollständigen Aufnahme der Übersetzungsstufen jeweils ein mindestens zweiteilig ausgebildetes Gehäuse aufweisen. Das Gehäuse kann - ebenso wie die Komponenten der Getriebestufe - bspw. durch Kunststoff oder Metall gebildet sein. Der jeweils erste Teil des Gehäuses kann ein oder mehrere Nuten besitzen und der jeweils zweite Teil des Gehäuses ein oder mehrere zu den Nuten korrespondierend ausgebildete Vorsprünge umfassen, die bei verbundenem ersten und zweiten Teil formschlüssig in die Nuten des jeweiligen ersten Teils eingreifen. Die Nuten des jeweils ersten Teils sowie die korrespondierend zu den Nuten ausgebildeten Vorsprünge des jeweils zweiten Teils können zur passgenauen Ausrichtung des jeweils ersten Teils bei Aufsetzen auf den jeweils zweiten Teil ausgebildet sein. Demnach kann der erste Teil wenigstens zwei Nuten besitzen, in welche wenigstens zwei korrespondierend ausgebildete Vorsprünge des jeweiligen zweiten Teils eingreifen. Die Vorsprünge können somit durch Passstifte ausgebildet sein, die in die jeweiligen Nuten formschlüssig eingreifen.

Die Nuten können randseitig im jeweiligen ersten Teil ausgebildet sein. Ebenso können die Vorsprünge des jeweiligen zweiten Teils vom jeweiligen zweiten Teil in Richtung des jeweiligen ersten Teils weisend randseitig abstehend ausgebildet sein. Die Nuten sowie die Vorsprünge können, sofern das Gehäuse durch Kunststoff ausgebildet ist, zusammen mit der jeweiligen Gehäusehälfte einstückig im Spritzgussverfahren hergestellt werden, so dass ohne zusätzliche Mittel kostensparend und vereinfacht die Möglichkeit einer passgenau Ausrichtung der wenigstens zwei Gehäusehälften gegeben ist.

Generell sind jedoch auch andere Varianten von Passungen möglich, bspw. separate Passstifte o. dgl., die für eine exakte Ausrichtung und Fluchtung der beiden Gehäusehälften sorgen können.

Um die Gehäusehälften des mindestens zweiteilig ausgebildeten Gehäuses ggf. nach passgenauer Ausrichtung miteinander zu verbinden, kann vorgesehen sein, dass der erste Teil und der zweite Teil jeweils mindestens einen Durchbruch aufweisen, welche Durchbrüche bei verbundenem erstem und zweitem Teil miteinander fluchten.

Durch den Durchbruch des ersten Teils und den Durchbruch des zweiten Teils können Fixiermittel, wie beispielsweise Schraubverbindungen oder Nieten, geführt sein, um den jeweils ersten Teil mit dem jeweils zweiten Teil zu verbinden. Ebenso ist ein Verbinden mittels Einrasten, Aufschnappen oder einer Klipparretierung möglich. Sofern vorteilhafterweise, wie vorhergehend bereits erwähnt, durch Nuten und Vorsprünge eine passgenaue Ausrichtung des jeweils ersten Teils und des jeweils zweiten Teils erfolgt, können der mindestens eine Durchbruch des ersten Teils und der mindestens eine Durchbruch des zweiten Teils nach passgenauer Ausrichtung miteinander fluchten, so dass die jeweiligen Fixiermittel einfach und ohne weitere Ausrichtung durch die Durchbrüche geführt werden können. Beispielsweise können der erste Teil und der zweite Teil eines mindestens zweiteilig ausgebildeten Gehäuses jeweils genau einen Durchbruch aufweisen. In bevorzugten Ausführungsformen besitzen der erste Teil und der zweite Teil jeweils mindestens zwei, vorzugsweise jeweils vier Durchbrüche, die paarweise bei passgenauer Ausrichtung des ersten Teils und des zweiten Teils miteinander fluchten. Durch jeden der paarweise fluchtenden Durchbrüche kann ein Fixiermittel, wie beispielsweise eine Schraubverbindung, geführt sind.

Zudem kann vorgesehen sein, dass das mindestens zweiteilig ausgebildete Gehäuse wenigstens jeweils eine Lagerung für das Antriebsmittel und/oder das Übertragungsmittels und/oder die Zahnstange und/oder das als Zahnrad ausgebildete Abtriebsmittel aufweist. Beispielsweise kann das Gehäuse auf zwei gegenüberliegenden Seiten jeweils eine Aufnahme für die Zahnstange ausbilden, durch welche Aufnahmen die Zahnstange geführt und am Gehäuse tragend gehalten ist. Die Lagerungen können als Bestandteil des Gehäuses ausgebildet und mit dem Gehäuse im Spritzgussverfahren hergestellt sein. Wie vorhergehend erwähnt, können das Antriebsmittel und/oder das Übertragungsmittel und/oder das als Zahnrad ausgebildete Abtriebsmittel auf einer Welle aufsitzen bzw. um eine Welle rotierend gelagert sein. Beispielsweise kann das Gehäuse einen oder mehrere Tragringe ausbilden, die sich um jeweils eine Welle erstrecken und die jeweilige Welle drehbar um ihre Längsachse am Gehäuse halten. Wie aus der obigen Beschreibung hervorgeht, sind diese Wellenlagerungen für die Zahnräder bzw. Übertragungsmittel jeweils als Gleitlagerungen ausgebildet, wobei die Gehäusehälften jeweils eingeformte Lagerschalen oder Lagersitze aufweisen können. Zusätzliche Lagersitze oder Lagerschalen, die bspw. in die Gehäusehälften nachträglich eingesetzt werden können, sind in aller Regel nicht notwendig, können jedoch gleichwohl vorhanden sein, wenn sich dies im Interesse einer möglichst langen Betriebsdauer und einer hohen Verschleißfestigkeit als zweckmäßig erweisen sollte.

Weiterhin kann vorgesehen sein, dass das Gehäuse im Bereich des oder der Tragringe, welche zum Halten der Welle des Antriebsmittels ausgebildet sind, eine vorzugsweise kreisrunde Öffnung aufweist, durch welche ein rotierendes Betätigungsglied für das jeweilige Verstellelement geführt ist. Das Betätigungsglied kann mit dem Antriebsmittel gekoppelt und zum rotierenden Antrieb des Antriebsmittels ausgebildet sein. Beispielsweise kann das Betätigungsglied formschlüssig durch das jeweilige Antriebsmittel greifen. Hierzu kann das Antriebsmittel einen Durchbruch aufweisen, durch den das Betätigungsglied formschlüssig geführt ist. In besonders bevorzugten Ausführungsformen ist vorstellbar, dass der Querschnitt des Betätigungsgliedes zumindest abschnittsweise als Polygon oder elliptisch ausgebildet ist und der Durchbruch des Antriebsmittels das zumindest abschnittsweise als Polygon oder elliptisch ausgebildete Betätigungsglied formschlüssig aufnimmt. Beispielsweise kann das Betätigungsglied zumindest abschnittsweise einen quadratischen Querschnitt ausbilden.

Sofern das als Zahnrad ausgebildete Abtriebsmittel und das Übertragungsmittel drehfest mit einer gemeinsamen Welle gekoppelt sind, können der gemeinsamen Welle ein oder mehrere Tragringe des Gehäuses zugeordnet sein. Durch die Tragringe, welche das aus mindestens zwei Teilen bestehende Gehäuse bevorzugt ausbildet, kann auf einfache Art und Weise eine Lagerung von Wellen der jeweiligen Übersetzungsstufen erfolgen, ohne dass eine weitere Fixierung notwendig ist. Auch können die Tragringe ganz allgemein als Lagersitze genutzt werden.

Insbesondere haben sich Ausführungsformen bewährt, bei welchen der erste Teil des Gehäuses wenigstens einen ersten Tragring ausbildet und der zweite Teil des Gehäuses wenigstens einen zweiten Tragring ausbildet, wobei der wenigstens eine erste Traging und der wenigstens eine zweite Tragring bei verbundenem erstem und zweitem Gehäuseteil fluchtend zueinander ausgerichtet sind. Eine als Bestandteil der Übersetzungsstufen vorgesehene Welle kann hierbei über den wenigstens einen ersten Tragring und den fluchtend zum wenigstens einen ersten Tragring ausgerichteten wenigstens einen zweiten Tragring gemeinsam drehend gehalten werden.

Auch kann vorgesehen sein, dass jeder der als Bestandteil der Übersetzungsstufen vorgesehenen Wellen ein Tragring des ersten Gehäuseteils und ein Tragring des zweiten Gehäuseteils zugeordnet sind.

Zudem kann vorgesehen sein, dass das Gehäuse auf seiner unteren Seite ein oder mehrere Öffnungen besitzt, durch welche flüssiges Medium aus dem Inneren des Gehäuses nach Außen abführbar ist. In der Praxis hat sich gezeigt, dass bei Reinigungsvorgängen, bei welchen der erfindungsgemäße Transportabschnitt oder Teile des erfindungsgemäßen Transportabschnittes mit Flüssigkeit beaufschlagt werden, ein Eindringen der jeweiligen Flüssigkeit in das Innere des Gehäuses nicht immer vollständig ausgeschlossen werden kann. Um die Gefahr einer Funktionsbeeinträchtigung sowie einer Korrosion von im Inneren des Gehäuses angeordneten Bestandteilen der Übersetzungsstufen zu vermindern, wird durch die vorgeschlagene Ausführungsform eine einfache Möglichkeit zur Verfügung gestellt, bei welcher das flüssige Medium im Falle eines Eintretens in das Gehäuse lediglich kurzzeitig mit den jeweiligen Komponenten in Kontakt treten kann und über die ein oder mehreren Öffnungen aus dem Gehäuse abgeführt wird.

Beispielsweise können zum Ausbilden der ein oder mehreren Öffnungen der erste Teil des Gehäuses wenigstens eine erste Tasche und der zweite Teil des Gehäuses wenigstens eine zweite Tasche ausbilden. Jeweils eine Tasche des ersten Teils des Gehäuses kann zusammen mit jeweils einer Tasche des zweiten Teils des Gehäuses jeweils eine Öffnung ausbilden. Die Taschen können einstückig mit dem jeweiligen Teils des Gehäuses im Spritzgussverfahren hergestellt werden, so dass nach passgenauer Ausrichtung des ersten Teils des Gehäuses zum zweiten Teil des Gehäuses die ein oder mehreren Öffnungen ausgebildet sind. Auf das Einbringen von zusätzlichen Bohrungen in das Gehäuse zum Abführen von Flüssigkeit kann bei dieser Ausführungsform verzichtet werden. Alternativ oder ergänzend kann das Gehäuse seitlich ein oder mehrere Öffnungen aufweisen, die ebenso für den Austritt von flüssigem Medium vorgesehen sein können.

In bevorzugten Ausführungsformen kann zudem vorgesehen sein, dass sämtliche Verstellelemente, die zur Verstellung des jeweiligen Führungselementes vorgesehen sind, durch ein gemeinsames und rotierendes Betätigungsglied mit dem jeweiligen Drehantrieb in Wirkverbindung gebracht sind. Das Betätigungsglied kann als eine mit dem Drehantrieb gekoppelte Welle ausgebildet sein. Sofern die Verstellelemente, wie vorhergehend beschrieben, eine Zahnstange umfassen, kann die Hub- und Rückhubbewegung der Zahnstange bei Verstellung des jeweiligen Führungselementes im Wesentlichen senkrecht zur Erstreckung des als Welle ausgebildeten Betätigungsgliedes erfolgen.

In bevorzugten Ausführungsformen ist zudem vorstellbar, dass das Betätigungsglied direkt mit einem Antriebsmittel der Übersetzungsstufen gekoppelt ist. Beispielsweise kann das Betätigungsglied formschlüssig über das jeweilige Antriebsmittel aufgenommen sein, so dass keine weiteren Verbindungen zur Koppelung der jeweiligen Verstellelemente mit dem jeweiligen Betätigungsglied notwendig sind. Insbesondere haben sich hierbei Ausführungsformen bewährt, bei welchen der Querschnitt des Betätigungsmittels bzw. der Querschnitt des als Welle ausgebildeten Betätigungsmittels durch ein Polygon, eine Ellipse oder ein Quadrat ausgebildet ist.

Die Koppelung der jeweiligen Verstellelemente über ein rotierendes gemeinsames Betätigungsglied könnte ohne die ein oder mehreren Übersetzungsstufen des erfindungsgemäßen Transportabschnittes mit Problemen verbunden sein. Aufgrund eines vom Drehantrieb auf das jeweilige Betätigungsglied übertragenen Momentes und der an den Verstellelementen auf das Betätigungsglied einwirkenden Widerstände bei Verstellung, ist bei Fehlen der Übersetzungsstufen eine starke Torsion des Betätigungsgliedes zu verzeichnen. Eine solche Torsion wäre in der Praxis nicht tolerabel, da hieraus Ungenauigkeiten der Verstellung resultieren würden. Um die Widerstände bzw. die Kräfte im Bereich der Verstellelemente zu reduzieren und eine Torsion des Betätigungsgliedes zumindest weitgehend zu vermeiden, kann bei Ausführungsformen mit gemeinsamen Betätigungsglied der Verstellelemente und Übersetzungsstufen des erfindungsgemäßen Transportabschnittes eine weitaus höhere Genauigkeit bei Verstellung des jeweiligen Führungselementes erreicht werden. Insgesamt sind somit eine Vielzahl von Verstellelementen mit nur einem Drehantrieb möglich. Technische Berechnungen haben ergeben, dass bis zu 40 Verstellelemente mit einem Drehantrieb ohne einer nennenswerten Torsion des Betätigungsgliedes realisierbar sind. Bevorzugt werden zwischen 10 und 30 Verstellelemente gekoppelt.

Sofern der Transportabschnitt derart ausgebildet ist, dass die Artikel über die Führungselemente kurvenförmig geführt werden, sind die Verstellelemente vorzugsweise entlang des Kurvenradius versetzt zueinander positioniert, so dass eine Koppelung der Verstellelemente über eine sich linear erstreckende Antriebswelle nicht möglich ist. Insbesondere für den kurvenförmigen Verlauf haben sich daher Ausführungsformen bewährt, bei welchen das Betätigungsglied aus mehreren Kardanwellen gebildet ist, wobei jedem der Verstellelemente eine eigene der Kardanwellen zugeordnet ist und jeweils benachbarte Kardanwellen drehfest miteinander gekoppelt sind. Damit ist gemeint, dass die Wellen, die für den Drehantrieb jeweils eines Verstellelementes sorgen, über Kardangelenke mit den Wellen der jeweils benachbarten Verstellelemente verbunden sind, so dass eine durchgängige Drehverbindung mittels mehrerer aneinander grenzender Wellen - verbunden über kardanische Gelenke - ermöglicht ist, auch über gekrümmte Verläufe. Sofern die Verstellelemente - wie vorhergehend bereits erwähnt - jeweils mindestens eine Zahnstange aufweisen, welche eine Hub und Rückhubbewegung zur Verstellung des jeweiligen Führungselementes umsetzen können, kann die Hub und Rückhubbewegung der jeweiligen mindestens einen Zahnstange senkrecht orientiert zur jeweiligen dem Verstellelement zugeordneten Kardanwelle erfolgen.

In diesem Zusammenhang sei darauf hingewiesen, dass die Begriffe der Kardanwelle sowie des Kardangelenks jeweils unterschiedliche Ausgestaltungen umfassen können, die den gewünschten Zweck erfüllen, nämlich eine weitgehend torsionsfreie Drehübertragung über gekrümmte Verläufe. Zu diesem Zweck können die Kardangelenke auch durch geeignete flexible Elemente gebildet sein, welche die gewünschte torsionsarme bzw. weitgehend torsionsfreie Drehübertragung zwischen zwei oder mehr aneinander grenzender und in Drehverbindung miteinander stehender Wellenabschnitte in nicht geradlinigem Verlauf ermöglichen.

Auch für eine Ausführungsform, bei welcher das Betätigungsglied aus mehreren Kardanwellen gebildet ist, wird vermittels der Übersetzungsstufen des erfindungsgemäßen Transportabschnittes eine Torsion der Kardanwellen stark reduziert oder sogar weitgehend eliminiert, womit eine erhöhte Genauigkeit bei Verstellung des jeweiligen Führungselementes ermöglicht wird.

Sofern ein Transportabschnitt Artikel über eine kurvenförmige Transportbahn führt, ergeben sich in der Praxis weitere potenzielle Probleme. Bekannt sind hierbei Transportabschnitte, welche aus einzelnen Führungselementen gebildet sind, die sich entlang der jeweiligen kurvenförmigen Transportbahn erstrecken. Sollen die Führungselemente nun versetzt - d.h. in ihren Abständen zueinander verstellt - werden, so entsteht bei einer solchen Verstellung bzw. Positionsversetzung und der damit einhergehenden Vergrößerung des Kurvenradius zwischen den einzelnen Führungselementen ein Spalt, welcher durch Verbindungsleisten oder Verschleißstreifen geschlossen werden kann. Mit einer Neupositionierung ist daher ein großer Aufwand verbunden. Weiter werden zusätzliche Mittel, wie die genannten Verbindungsleisten oder Verschleißstreifen notwendig, um einen aus einer Verstellung resultierenden Spalt zwischen den einzelnen Führungselementen schließen zu können.

Um diesem Problem in der Praxis entgegenzutreten, ist vorgesehen, dass das jeweilige verstellbare Führungselement flexibel ausgebildet ist, wobei bei einer Änderung seines Abstandes zum anderen Führungselement der Radius des kurvenförmigen Verlaufs über die jeweiligen mehreren Verstellelemente durch eine elastische Verformung des flexiblen Führungselementes anpassbar ist.

Insbesondere haben sich zur flexiblen Ausbildung des jeweiligen Führungselementes Ausführungsformen bewährt, bei welchen das jeweilige Führungselement durch Kunststoff, wahlweise auch durch ausreichend flexibles Metallblech ausgebildet ist. Bevorzugt kann sich das jeweilige verstellbare Führungselement entlang der gesamten kurvenförmigen Transportbahn erstrecken.

Weiter ist vorgesehen, dass die lineare Stellbewegung des jeweiligen Verstellelementes auf jeweils einen zugeordneten und mit dem Führungselement gekoppelten Stützschuh übertragen wird, welcher Stützschuh jeweils eine mit dem Führungselement in Anlage gebrachte Kontaktfläche aufweist, die dem Verlauf des Führungselementes zumindest annäherungsweise folgt. Sofern für ein verstellbares Führungselement mehrere Verstellelemente vorgesehen sind, kann jedem der Verstellelemente ein separater Stützschuh zugeordnet sein, welcher eine mit dem Führungselement in Anlage gebrachte Kontaktfläche aufweist, die dem Verlauf des Führungselementes zumindest annäherungsweise folgt. Sämtliche Stützschuhe der jeweiligen Verstellelemente können sich zusammen zumindest annäherungsweise entlang des jeweiligen verstellbaren Führungselementes erstrecken. Bevorzugt können die Stützschuhe durch Kunststoff ausgebildet sein. Selbstverständlich können auch andere Materialien zum Einsatz kommen, bspw. Metall oder Holz oder mineralische Werkstoffe. Die Stützschuhe können dafür vorgesehen sein, das jeweilige Führungselement verschiebbar zu tragen; zudem dienen sie der Druckabstützung des jeweiligen Führungselementes in radialer Richtung nach außen.

Die jeweiligen Stützschuhe bzw. die Kontaktflächen der jeweiligen Stützschuhe können dem kurvenförmigem Verlauf des Führungselementes folgen und flächig am jeweiligen Führungselement anliegen. Vorstellbar ist zudem, dass bei wenigstens einer gemeinsamen Verstellposition der Verstellelemente die zugeordneten Stützschuhe miteinander eine durchgehende und unterbrechungsfreie Kontaktfläche am jeweiligen Führungselement ausbilden.

Um das jeweilige verstellbare Führungselement mit den jeweiligen Stützschuhen einfach und unkompliziert zu verbinden, kann vorgesehen sein, dass das wenigstens eine verstellbare Führungselement eine Nut aufweist, in welcher die Stützschuhe zum verschiebbaren Halten des Führungselementes geführt sind. Insbesondere kann eine Verbindung der Stützschuhe über eine im Führungselement eingebrachte Nut vorteilhaft sein. Sinnvollerweise kann der jeweilige Stützschuh nicht in der Nut des Führungselementes geklemmt, sondern in der Nut des jeweiligen Führungselementes verschiebbar gehalten sein, vorzugsweise mit einem definierten Spiel. Bei Verstellung des Führungselementes können die jeweiligen Stützschuhe in der Nut der jeweiligen Verstellelemente gleiten und der Radius des Führungselementes ggf. angepasst bzw. angenähert werden.

Um den Kurvenradius des Führungselementes anpassen zu können, haben sich insbesondere Ausführungsformen bewährt, bei welchen die Stützschuhe mit geringem Spiel in die Nut des jeweiligen Führungselementes greifen. Durch die Lagerung der Stützschuhe mit geringem Spiel in der jeweiligen Nut kann der tatsächliche Ist-Kurvenradius an einen gewünschten Soll-Kurvenradius weiter angenähert werden. Dieses Spiel kann wahlweise geringe Bewegungen zwischen dem Schuh und dem Führungselement in vertikaler und/oder in horizontaler Richtung erlauben.

Sofern ein zu hoher Verschleiß des jeweiligen Führungselementes vorhanden ist und ein Austausch des jeweiligen Führungselementes notwendig wird, bieten Ausführungsformen, bei welchen das Führungselement eine Nut ausbildet, weiterhin den Vorteil eines einfachen Austauschs des Führungselementes ohne vorheriges Lösen von Fixiermitteln, wie Schrauben oder dergleichen.

Alternativ zur beschriebenen Ausführungsform kann es sein, dass die Stützschuhe jeweils eine Nut ausbilden und das jeweilige verstellbare Führungselement eine oder mehrere Nasen aufweist, die in die jeweilige Nut des Stützschuhes geführt ist. Auch bei derartigen Ausführungsformen kann ein geringes Spiel zwischen den Nasen und der jeweiligen Nut bestehen.

Weiter kann vorgesehen sein, dass beide der zwei ungefähr parallel angeordneten Führungselemente über jeweils mehrere Verstellelemente quer zur Förderrichtung in ihrem jeweiligen Abstand zum anderen Führungselement verstellbar sind. Einem ersten der zwei ungefähr parallel angeordneten Führungselemente können hierbei mehrere erste Verstellelemente zugeordnet sein. Einem zweiten der zwei ungefähr parallel angeordneten Führungselemente können hierbei ebenfalls mehrere zweite Verstellelemente zugeordnet sein. Die ersten und die zweiten Verstellelemente können jeweils mindestens eine Zahnstange aufweisen. Die Zahnstangen der ersten Verstellelemente können mit Zahnstangen der zweiten Verstellelemente paarweise fluchten, so dass sich jeweils die Verstellelemente paarweise zu beiden Außenseiten der Transportbahn gegenüber stehen. Beide Führungselemente können -wie vorhergehend beschrieben - flexibel ausgebildet sein.

Vorstellbar ist hierbei zudem, dass sämtlichen ersten Verstellelementen ein erster Drehantrieb zugeordnet ist und sämtlichen zweiten Verstellelementen ein zweiter Drehantrieb zugeordnet ist. Sämtliche ersten Verstellelemente können über ein erstes rotierendes Betätigungsglied mit dem ersten Drehantrieb gekoppelt sein, während sämtliche zweiten Verstellelemente über ein zweites Betätigungsglied mit dem zweiten Drehantrieb gekoppelt sind. Das erste und/oder das zweite Betätigungsglied können jeweils, wie vorhergehend bereits beschrieben, durch mehrere Kardanwellen ausgebildet sein.

In der Praxis haben sich insbesondere Ausführungsformen bewährt, bei welchen die Anzahl an ersten Verstellelementen identisch zur Anzahl an zweiten Verstellelementen ausgebildet ist. Erste Verstellelemente können zu zweiten Verstellelementen paarweise auf gegenüberliegenden Seiten einer Transportbahn der Artikel angeordnet sein. Die jeweilige lineare Stellbewegung der ersten Verstellelemente kann jeweils in Richtung des gegenüberliegenden zweiten Verstellelementes gerichtet sein. Die jeweilige lineare Stellbewegung der zweiten Verstellelemente kann jeweils in Richtung des gegenüberliegenden ersten Verstellelementes gerichtet sein.

Auch ist vorstellbar, dass sämtliche ersten Verstellelemente und sämtlich zweiten Verstellelemente mit einem gemeinsamen Drehantrieb gekoppelt sind und die lineare Stellbewegung sämtlicher erster Verstellelemente zumindest annäherungsweise synchron zur linearen Stellbewegung sämtlicher zweiter Verstellelemente vermittels des gemeinsamen Drehantriebs erfolgt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform eines Transportabschnittes, welcher nicht zur Erfindung gehört.
Fig. 2 zeigt eine schematische Perspektivansicht eines gekrümmt verlaufenden Teils des Transportabschnittes.
Fig. 3 zeigt eine schematische Draufsicht auf die Ausführungsform aus Fig. 2.
Fig. 4 zeigt einen schematischen Querschnitt durch die Ausführungsform aus den Figuren 2 und 3 entlang der Linie A-A aus Fig. 3.
Fig. 5 zeigt einen weiteren schematischen Querschnitt durch die Ausführungsform aus den Figuren 2 bis 4 entlang der Linie B-B aus Fig. 3.
Fig. 6 zeigt eine schematische Perspektivansicht einer alternativen Ausführungsvariante eines Transportabschnittes, welcher nicht zur Erfindung gehört.
Fig. 7 zeigt eine schematische Perspektivansicht eines Verstellelementes, wie es für verschiedene Ausführungsformen des erfindungsgemäßen Transportabschnittes Verwendung finden kann.

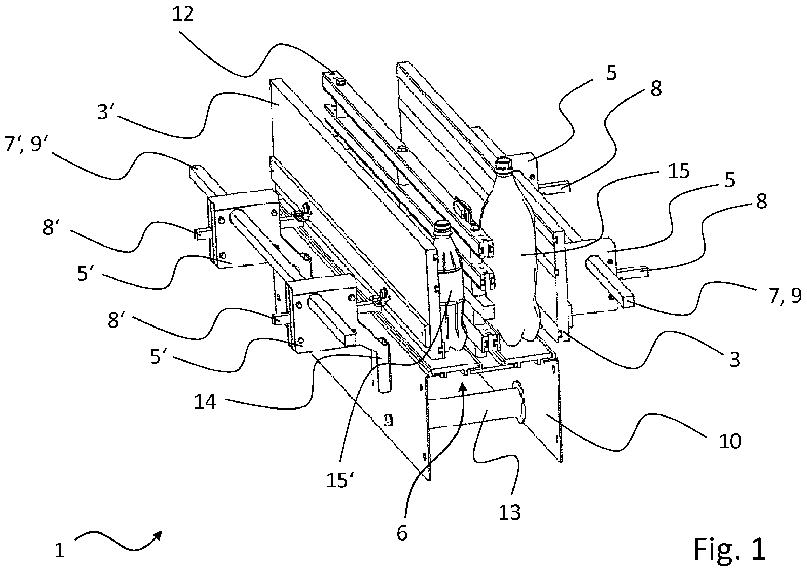

Für gleiche oder gleich wirkende Elemente der Erfindung werden in den Figuren 1 bis 7 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Transportabschnitt ausgestaltet sein kann und stellen keine abschließende Begrenzung dar. Insbesondere ist ein beliebiger Wechsel von geradlingen und kurvenförmigen Verlauf des Transportbandabschnitts mit nur einem Drehantrieb möglich, wobei vorteilhaft der Drehantrieb zentral angeordnet ist. Unter zentral versteht man, dass sich die Betätigungsglieder bzw. Wellen vom Drehantrieb in beide Richtungen entlang des Transportbandabschnitts zu den einzelnen Verstellelementen erstrecken.

Besonders soll nochmal hervorgehoben werden, dass die Verstellung der Führungselemente im einbahnigen, zweibahnigen oder mehrbahnigen Transport als auch im Massentransport Anwendung findet. Ebenfalls ist eine Verstellung des Führungselementes nur einseitig am Transportabschnitt möglich, das korrespondierende gegenüberliegende Geländer wird dann ortsfest ausgeführt.

Die schematische Perspektivansicht der Fig. 1 zeigt eine erste Ausführungsvariante eines erfindungsgemäßen Transportabschnittes 1, welcher nicht zur Erfindung gehört. Der Transportabschnitt 1 ist ausgebildet zur Beförderung von Artikeln wie Getränkebehältern oder Flaschen 15, wobei im Ausführungsbeispiel der Fig. 1 eine erste Flasche 15 mit erstem Querschnitt bzw. erster Größe und eine zweite Flasche 15' mit zweitem Querschnitt bzw. zweiter Größe zu erkennen sind. Vor Eintritt der Flaschen 15 und 15' in den Transportabschnitt 1 erfolgt eine in Fig. 1 nicht dargestellte Auftrennung der Flaschen 15 und 15' nach maximalem Querschnitt bzw. nach maximaler Größe der Flaschen 15 bzw. 15'.

Wie es die Fig. 1 erkennen lässt, ist der Querschnitt der zweiten Flasche 15' kleiner als der Querschnitt der ersten Flasche 15 ausgebildet. In der Praxis werden bei dem Ausführungsbeispiel der Fig. 1 normalerweise mehrere Flaschen 15 und 15' mit jeweils identischen Querschnitten in einer Reihe und hintereinander über den Transportabschnitt 1 befördert. Aus Gründen der Übersichtlichkeit ist für jede Reihe an Flaschen lediglich eine Flasche 15 bzw. 15' dargestellt. Die jeweiligen Reihen an hintereinander beförderten Flaschen 15 und 15' bewegen sich im Ausführungsbeispiel der Fig. 1 parallel zueinander.

Zu erkennen ist weiter eine Transportauflage 6, dich sich in horizontaler Förderrichtung der Flaschen 15 und 15' erstreckt und auf welcher die Flaschen 15 und 15' stehen. Die Transportauflage 6 steht fest oder bewegt sich, wobei die Flaschen 15 und 15' entlang der Transportauflage 6 gleiten oder bewegt werden. In weiteren Ausführungsformen kann die Transportauflage 6 auch durch umlaufende Transportbänder, Gliederbänder, Gliederketten oder weitere Fördereinrichtungen ausgebildet sein.

Außerdem ist ein Maschinenrahmen 10 beispielhaft dargestellt, mit welchem die Transportauflage 6 verbunden bzw. verschraubt ist. Der Maschinenrahmen 10 ist im gezeigten Ausführungsbeispiel durch zwei parallel zueinander orientierte Seitenwände angedeutet, zu deren Stabilisierung und Verbindung mehrere zwischengeordnete und mit den Seitenwänden verschraubte Distanzstücke vorgesehen sind. In Fig. 1 ist ein derartiges Distanzstück mit der Bezugsziffer 13 beispielhaft dargestellt.

Die Artikel bzw. die Flaschen 15 und 15' werden zwischen zwei parallel angeordneten und verstellbaren Führungselementen 3 und 3' bewegt. Zwischen den beiden Führungselementen 3 und 3' ist im Ausführungsbeispiel der Fig. 1 eine Trennwand 12 angeordnet, die sich parallel zu beiden Führungselementen 3 und 3' erstreckt. Die Trennwand 12 ist vorliegend aus mehreren übereinander angeordneten und parallel zueinander orientierten Führungsstäben gebildet. Die Trennwand 12 steht fest und kann gegenüber den Führungselementen 3 und 3' nicht bewegt werden.

Die Flaschen 15' mit geringerem Querschnitt bzw. mit geringerer Größe werden zwischen dem zweiten 3' der beiden Führungselemente 3 und 3' und der Trennwand 12 transportiert (in der Darstellung der Fig. 1 links), während die Flaschen 15 mit größerem Querschnitt zwischen dem ersten 3 der beiden Führungselemente 3 und 3' und der Trennwand 12 transportiert werden (in der Darstellung der Fig. 1 rechts). Der Abstand zwischen den beiden Führungselementen 3 und 3' und der Trennwand 12 ist derart auszubilden, dass die Flaschen 15 und 15' stabil und ohne zu kippen oder zu klemmen zwischen dem jeweiligen Führungselement 3 bzw. 3' und der Trennwand 12 transportiert werden können.

Demzufolge entspricht der Abstand zwischen dem ersten Führungselement 3 und der Trennwand 12 etwas mehr als dem maximalen Querschnitt bzw. dem Durchmesser der ersten Flasche 15, während der Abstand zwischen dem zweiten Führungselement 3' und der Trennwand 12 etwas mehr als dem maximalen Querschnitt bzw. dem maximalen Durchmesser der zweiten Flasche 5' entspricht. Bevorzugt wird ein Abstand gewählt, bei dem die Führungselemente um 2 bis 5 mm weiter zur Trennwand 12 beabstandet sind, als die jeweilige Artikel- oder Behälterbreite ausgebildet ist.

Vorteilhaft ist ein Verstellbereich vorgesehen, der den Abstand der Führungselemente pro Verstellelement zwischen 40 und 120 mm und besonders vorteilhaft um die 60 mm variieren lässt.

Da die Flasche 15 einen größeren maximalen Querschnitt oder Durchmesser als die zweite Flasche 15' aufweist, ist der Abstand zwischen erstem Führungselement 3 und der Trennwand 12 vergrößert gegenüber dem Abstand des zweiten Führungselementes 3' und der Trennwand 12 ausgebildet.

Nach längerer Zeit des Transportes von Flaschen 15 bzw. 15' über den Transportabschnitt 1, kann es sein, dass die Führungselemente 3 und/oder 3' auf ihrer den Flaschen 15' und 15' zugewandten Seite Verschleißerscheinungen zeigen, so dass sich der Abstand zwischen dem jeweiligen Führungselement 3 bzw. 3' und der Trennwand 12 gegenüber dem ursprünglichem Abstand vergrößert. In diesem Fall ist eine Nachjustierung der Führungselemente 3 bzw. 3' erforderlich, wobei die Führungselemente 3 und 3' jeweils in Richtung der Trennwand 12 bewegt werden um die Verschleißerscheinungen zu kompensieren und den jeweiligen Abstand zwischen Führungselement 3 bzw. 3' und der Trennwand 12 zu verringern. Eine derartige Einstellung bzw. Nachjustierung muss sehr feinfühlig erfolgen, weshalb Mechanismen notwendig sind, die ein Nachjustieren der Führungselemente 3 bzw. 3' vermittels Annäherung an die Trennwand 12 um lediglich einen kleinen Betrag erlauben.

Weiter kann vorgesehen sein, dass weitere Flaschen 15 und 15' über den Transportabschnitt 1 befördert werden sollen, die sich gegenüber den Flaschen 15 bzw. 15' im maximalen Querschnitt oder Durchmesser unterscheiden. Auch in diesem Fall ist eine Justierung der Führungselemente 3 und 3' notwendig, um den Abstand zwischen der Trennwand 12 und den jeweiligen Führungselementen 3 und 3' an den maximalen Querschnitt bzw. Durchmesser der nachfolgend zu befördernden Flaschen anzupassen.

Die Erfindung umfasst hierzu mehrere Verstellelemente 5 und 5' die beidseitig einer Transportstrecke der Flaschen 15 und 15' angeordnet sind. Hierbei stehen erste Verstellelemente 5 mit dem ersten Führungselement 3 in Kontakt, während zweite Verstellelemente 5' mit dem zweiten Führungselement 3' in Kontakt gebracht sind. Jedes der Verstellelemente 5 bzw. 5' besitzt eine Zahnstange 8 bzw. 8', die einen Hub und Rückhub senkrecht zur Transportrichtung der Flaschen 15 bzw. 15' und in einer Ebene parallel zur Transportbandoberfläche ausführen können.

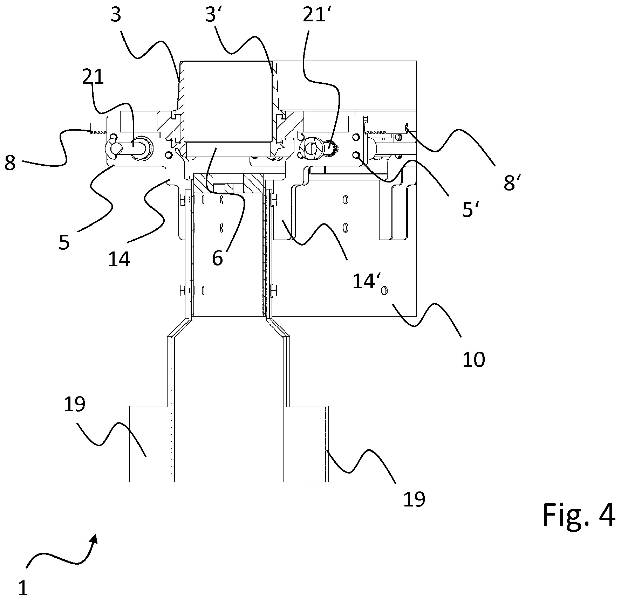

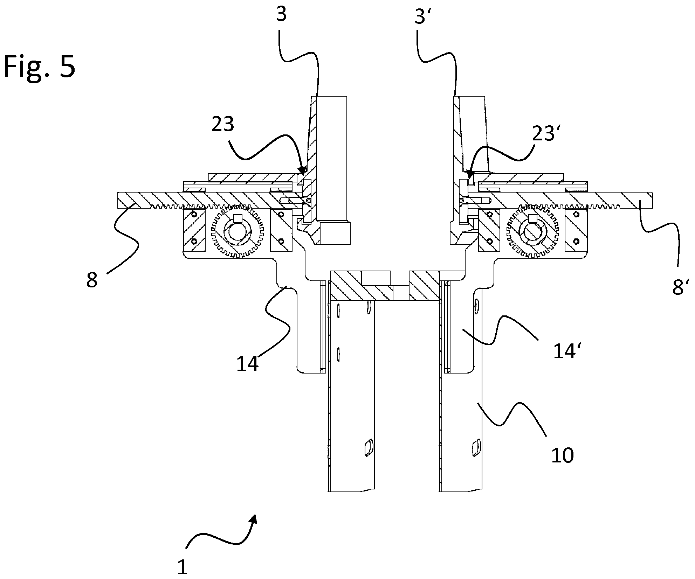

Die in Fig. 1 dargestellte Ausführungsform, welche eine Verstellung von Führungselemente 3 bzw. 3' über genau vier Verstellelemente 5 bzw. 5' vornimmt, ist lediglich beispielhaft zu verstehen, so dass in der Praxis weitere Ausführungsformen von Transportabschnitten 1 existieren, bei welchen die Verstellelemente 5 bzw. 5' von der in Fig. 1 dargestellten Ausführungsform in Anzahl und Ausbildung abweichen. Sämtliche der Verstellelemente 5 bzw. 5' sind über jeweils einen zugeordneten Tragarm 14 (vgl. Figuren 4 und 5) an dem Maschinenrahmen 10 verankert.

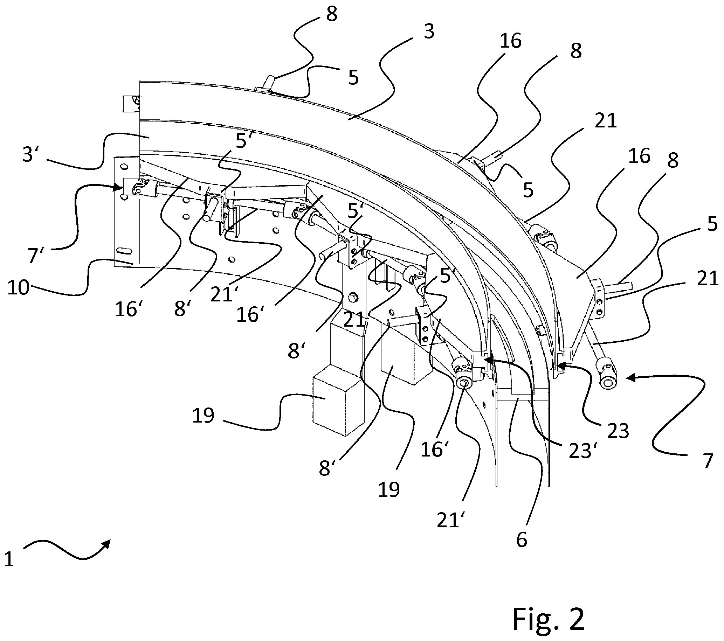

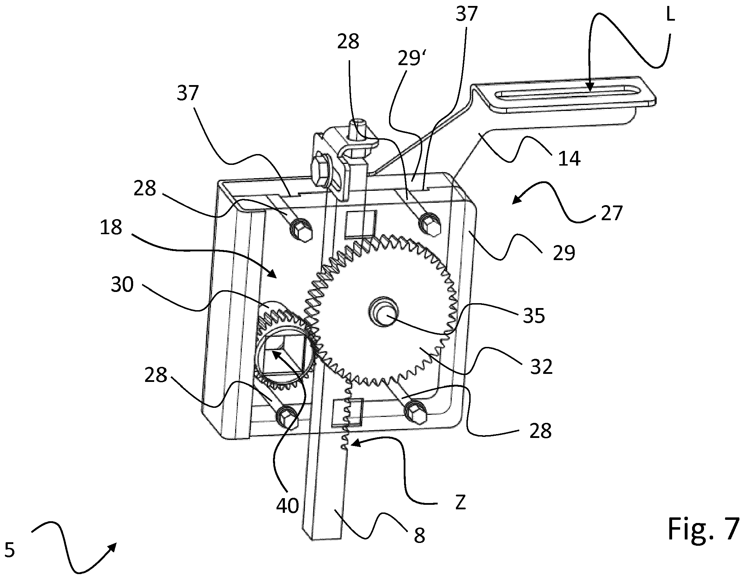

Eine detaillierte Ansicht einer Ausführungsform für ein Verstellelement 5 bzw. 5', wie es auch für den Transportabschnitt der Fig. 1 Verwendung finden kann, ist in Fig. 7 dargestellt. Das in Fig. 7 dargestellte Ausführungsbeispiel kann ebenso für den Transportabschnitt 1 gemäß Figuren 2 bis 6 Verwendung finden.

Die Zahnstangen 8 bzw. 8' der Verstellelemente 5 und 5' sind jeweils tragend mit ihrem zugeordneten Führungselement 3 bzw. 3' über Schraubverbindungen oder über andere geeignete Befestigungen in Kontakt gebracht. Weiter sind sämtliche Zahnstangen 8 bzw. 8' parallel zueinander orientiert. Auf gegenüberliegenden Seiten angeordnete Zahnstangen 8 bzw. 8' der Verstellelemente 5 bzw. 5' fluchten hierbei paarweise, was jedoch für die einwandfreie Funktion der erfindungsgemäßen Vorrichtung keine Bedingung ist.

Die in Fig. 1 dargestellten ersten Verstellelemente 5 des ersten Führungselementes 3 werden über ein gemeinsames und rotierendes Betätigungsglied 7, ausgebildet als Welle 9, zumindest näherungsweise synchron betätigt. Die zweiten Verstellelemente 5' des zweiten Führungselementes 3' werden ebenso über ein gemeinsames und rotierendes zweites Betätigungsglied 7', ausgebildet als Welle 9', zumindest annäherungsweise synchron betätigt.

Jedes der Betätigungsglieder 7 und 7' bzw. jede Welle 9 und 9' wird bei Verstellung des jeweiligen zugeordneten Führungselementes 3 bzw. 3' über einen eigenen Drehantrieb (nicht dargestellt) um ihre Längsachse rotierend angetrieben. Der Drehantrieb kann bspw. als Elektromotor ausgebildet sein. Vorstellbar ist auch, dass der Drehantrieb bspw. als Handkurbel oder dergleichen ausgebildet ist. Auch andere Möglichkeiten des rotatorischen Antriebes sind denkbar.

Um die parallele Orientierung der beiden Führungselemente 3 bzw. 3' nach Verstellung weiterhin gewährleisten zu können, müssen der Hub- und Rückhub beider Zahnstangen 8 bzw. beider Zahnstangen 8' identisch ausgebildet sein.

Bei Betätigung der Verstellelemente 5 bzw. 5' wird von der jeweiligen Welle 9 bzw. 9' ein Moment an das Verstellelement 5 bzw. 5' weitergegeben, woraus eine Torsion der Welle 9 bzw. 9' resultieren kann. Demnach kann es sein, dass der mittels der jeweiligen Verstellung bewirkte Hub bzw. Rückhub mehrerer der ersten Zahnstangen 8 und/oder der zweiten Zahnstangen 8' aufgrund der Torsion unterschiedlich ausgebildet ist und die jeweiligen Führungselemente 3 und/oder 3' nach Verstellung nicht mehr parallel zueinander orientiert sind.

Der erfindungsgemäße Transportabschnitt 1 besitzt daher Verstellelemente 5 und 5', die, wie beispielhaft im Ausführungsbeispiel der Fig. 7 dargestellt, jeweils ein oder mehrere Übersetzungsstufen 18 aufweisen, welche die rotierende Bewegung der Wellen 9 und 9' auf eine lineare Stellbewegung der Zahnstangen 8 und 8' und der daran aufgehängten Führungselement 3 bzw. 3' übertragen. Durch die ein oder mehreren Übersetzungsstufen 18 wird die Drehfrequenz der Welle 9 bzw. 9', welche zur Neupositionierung des jeweiligen Führungselementes 3 bzw. 3' notwendig ist, erhöht. Gleichzeitig wird die Stellkraft, welche zur Betätigung der Verstellelemente 5 und 5' notwendig ist, um ein Vielfaches reduziert.

Die Übersetzungsstufen 18 bieten einerseits den Vorteil, dass eine sehr genaue Position für das jeweilige Führungselement 3 bzw. 3' bei reduzierter Stellkraft vorgegeben werden kann. Eine derartige genaue Positionierung ist insbesondere bei Kompensation der vorherig erwähnten Verschleißerscheinungen notwendig. Weiter bieten die ein oder mehreren Übersetzungsstufen 18 des erfindungsgemäßen Transportabschnittes 1 den Vorteil, dass die Haltekräfte der Zahnstangen 8 und 8' sowie der mit den Zahnstangen 8 und 8' gekoppelten Führungselemente 3 und 3' um ein Vielfaches erhöht werden können.

Hiermit kann eine stabile Lagerung der Führungselemente 3 und 3' über die Zahnstangen 8 und 8' gewährleistet werden. In der Praxis hat sich gezeigt, dass die durch die Wellen 9 und 9' aufzubringenden Kräfte für die Betätigung der Verstellelemente 5 und 5' bspw. um ein Viertel reduziert werden können, woraus sich eine geringere Torsion der Welle 9 bzw. 9' mit resultierender Möglichkeit zur genauen und nahezu vollständigem Beibehalten der parallelen Ausrichtung bei Verstellung der Führungselemente 3 und 3' ergibt.

Weiter hat sich gezeigt, dass die Haltekräfte der Zahnstangen 8 bzw. 8' bspw. vierfach vergrößert gegenüber Ausführungsformen ohne Getriebestufen ausgebildet sein können. Eine stabilere Gesamtkonstruktion wird vermittels der Übersetzungsstufen 18 somit zur Verfügung gestellt.

Die Fig. 2 zeigt eine schematische Perspektivansicht einer Ausführungsform des erfindungsgemäßen Transportabschnittes 1, der einen gekrümmten Verlauf aufweist. Der Transportabschnitt 1 aus dem Ausführungsbeispiel der Fig. 2 ist ausgebildet zur Beförderung von Flaschen 15 bzw. 15' (vgl. Fig. 1), die im Ausführungsbeispiel der Fig. 2 aus Gründen Übersichtlichkeit nicht mit dargestellt wurden. Der Transportabschnitt 1 im Ausführungsbeispiel der Figur 2 zeigt einen einbahnigen Transport.

Die Flaschen 15 bzw. 15' werden hierbei einreihig und stehend auf der Transportauflage 6 befördert. Eine Trennwand 12, wie im Ausführungsbeispiel der Fig. 1 gezeigt, ist aufgrund der einreihigen Beförderung der Flaschen 15 bzw. 15' in Fig. 2 nicht vorhanden. Sofern ein Strom an Flaschen 15 bzw. 15' zweireihig befördert werden soll, kann vorgesehen sein, dass eine Trennwand 12 zwischen den beiden Führungselementen 3 und 3' angeordnet ist, die dem kurvenförmigen Verlauf der Transportauflage 6 folgt.

Analog zum Ausführungsbeispiel der Fig. 1 ist die Transportauflage 6 in Fig. 2 ortsfest ausgebildet, wobei die Artikel bzw. Flaschen 15 bzw. 15' bei Transport über die Transportauflage 6 gleiten. Weiter ist die Transportauflage 6 fest mit dem Maschinenrahmen 10 verbunden, welcher über Standbeine 19 auf einer Bodenfläche aufsteht. Auch erstreckt sich der Maschinenrahmen 10 zusammen mit der Transportauflage 6 kurvenförmig.

Der einreihige Strom aus Flaschen 15 bzw. 15' wird zwischen dem ersten Führungselement 3 und dem zweiten Führungselement 3' bewegt. Das erste Führungselement 3 und das zweite Führungselement 3' lenken die jeweiligen Flaschen 15 bzw. 15' entlang einer kurvenförmigen Bahn bzw. einer kurvenförmigen Transportstrecke und sind hierzu ungefähr parallel zueinander angeordnet. Um den einreihen Strom an Flaschen 15 bzw. 15' stabil und ohne zu klemmen entlang der kurvenförmigen Transportstrecke führen zu können, ist der Abstand der beiden Führungselemente 3 und 3' etwas größer als der maximale Querschnittsdurchmesser der jeweiligen Flaschen 15 bzw. 15' ausgebildet.

Beide Führungselemente 3 und 3' sind im Ausführungsbeispiel der Fig. 2 quer zur Förderrichtung über jeweils drei Verstellelemente 5 bzw. 5' verstellbar ausgebildet. Die Verstellelemente 5 bzw. 5' besitzen jeweils mehrere Übersetzungsstufen 18. Ein möglicher detaillierter Aufbau für die Verstellelemente 5 und 5' des Ausführungsbeispiels aus Fig. 2 ist in Fig. 7 dargestellt.

Ebenso wie bei dem in Fig. 1 gezeigten Ausführungsbeispiel weisen die Verstellelemente 5 bzw. 5' jeweils eine Zahnstange 8 bzw. 8' auf. Die Zahnstangen 8 und 8' sind in Fig. 2 an jeweils einen Stützschuh 16 bzw. 16' gekoppelt, die jeweils eine Kontaktfläche aufweisen, welche dem kurvenförmigen Verlauf des jeweiligen Führungselementes 3 bzw. 3' zumindest annäherungsweise folgen. Die Hub- und Rückhubbewegung der Zahnstangen 8 bzw. 8' ist jeweils parallel zur Transportauflage 6 orientiert.

Die ersten Verstellelemente 5 für das erste Führungselement 3 und die zweiten Verstellelemente 5' für das zweite Führungselement 3' sind jeweils über einen gemeinsamen Drehantrieb (nicht dargestellt) miteinander gekoppelt und synchronisiert. Der Drehantrieb kann auch bei Ausführungsbeispiel aus Fig. 2 durch einen Elektromotor oder eine Handkurbel ausgebildet sein. In Fig. 2 erfolgt die Koppelung an den jeweiligen Drehantrieb über die Betätigungsglieder 7 und 7'. Hierbei werden die ersten Verstellelemente 5 über das Betätigungsglied 7 angesteuert, die zweiten Verstellelemente 5' über das Betätigungsglied 7'.

Sowohl das Betätigungsglied 7 als auch das Betätigungsglied 7' sind durch mehrere Kardanwellen 21 bzw. 21' ausgebildet, wobei jedem der Verstellelemente 5 bzw. 5' eine eigene Kardanwelle 21 bzw. 21' zugeordnet ist. Benachbarte Kardanwellen 21 bzw. 21' sind drehfest miteinander verbunden, gegenüberliegende Kardanwellen 21 und 21' jeweils paarweise im Wesentlichen parallel zueinander orientiert.

Aufgrund der schematischen Darstellung besitzen die Kardanwellen 21 bzw. 21' in Fig. 2 einen runden Querschnitt. In bevorzugten Ausführungsformen können die Kardanwellen 21 und 21' einen rechteckigen Querschnitt besitzen und direkt zum Antrieb an die jeweiligen ein oder mehreren Übersetzungsstufen 18 der Verstellelemente 5 bzw. 5' gekoppelt sein. Insbesondere eignen sich hierbei Ausführungsformen, bei welchen die Kardanwellen 21 bzw. 21' bzw. die Betätigungsglieder 7 und/oder 7' mit nicht kreisrundem und polygenem oder elliptischem Querschnitt zum Antrieb formschlüssig in die ein oder mehreren Übersetzungsstufen 18 eingreifen.

Da auch im Ausführungsbeispiel der Fig. 2 von den Kardanwellen 21 bzw. 21' ein Moment an das jeweils zugeordnete Verstellelement 5 bzw. 5' weitergegeben wird, besteht die Gefahr, dass hieraus eine starke Torsion der Kardanwellen 21 bzw. 21' resultiert. Die Verstellbewegung der Verstellelemente 5 bzw. 5' kann entlang des kurvenförmigen Verlaufs des Führungselemente 3 bzw. 3' aus diesem Grunde ggf. nicht gleichmäßig ausgebildet sein, so dass das erste Führungselement 3 zum zweiten Führungselement 3' nach Verstellung möglicherweise nicht mehr im Wesentlichen parallel geführt ist.

Ebenso besitzt der Transportabschnitt aus Fig. 2 zur Vermeidung des genannten Problems daher Verstellelemente 5 und 5', die gemäß Ausführungsbeispiel aus Fig. 7 ausgebildet sind und jeweils ein oder mehrere Übersetzungsstufen 18 aufweisen. Mittels der Übersetzungsstufen 18 wird die Drehfrequenz der Kardanwellen 21 bzw. 21' erhöht, gleichzeitig wird die Stellkraft, welche zur Betätigung der Verstellelemente 5 und 5' und zur Neupositionierung der Führungselemente 3 und 3' notwendig ist, reduziert. Weiter wird die Torsion der Kardanwellen 21 bzw. 21' vermindert, was eine genauere Positionierung der Führungselemente 3 bzw. 3' erlaubt.

Beide der in Fig. 2 gezeigten Führungselemente 3 und 3' sind durch Kunststoff ausgebildet und flexibel bzw. reversibel elastisch verformbar. Sofern eine Neupositionierung der Führungselemente 3 bzw. 3' über die jeweiligen Verstellelemente 5 bzw. 5' erfolgt, ist der Radius des kurvenförmigen Verlaufs aufgrund der Flexibilität der beiden Führungselemente 3 und 3' zumindest näherungsweise anpassbar.

Die Stützschuhe 16 bzw. 16' besitzen hierzu Kontaktflächen, die dem kurvenförmigen Verlauf des Führungselementes 3 bzw. 3' wenigstens annäherungsweise folgen. In Fig. 2 ist zudem zu erkennen, dass die Stützschuhe 16' in ihrer eingenommenen Position miteinander in Kontakt gebracht sind und gemeinsam eine durchgehende Kontaktfläche zum Führungselement 3' ausbilden. Eine Bewegung der Stützschuhe 16' in Richtung des ersten Führungselementes 3' und vermittels einer Hubbewegung der Zahnstangen 8' ist zur Verkleinerung des Abstandes zwischen erstem und zweitem Führungselement 3 und 3' möglich, während eine weitere Bewegung der Stützschuhe 16' weg vom ersten Führungselement 3 und vermittels einer Rückhubbewegung der Zahnstangen 8' durch den jeweiligen benachbarten Kontakt der Stützschuhe 16'verhindert wird. Die Stützschuhe 16' sind somit in eine Endlage überführt.

Die Führungselemente 3 bzw. 3' weisen zudem jeweils eine Nut 23 und 23' auf, in denen die Stützschuhe 16 bzw. 16' verschiebbar gelagert sind. Auch ist vorstellbar, dass die Stützschuhe 16 bzw. 16' eine Nut aufweisen, in denen die Führungselemente 3 bzw. 3' verschiebbar gelagert sind, wobei die Führungselemente 3 bzw. 3' nur einmal am zentralen Stützschuh 16 bzw. 16' fixiert sind.

Die Lagerung der Stützschuhe in der jeweiligen Nut 23 bzw. 23' ist mit einem gewissen Spiel ausgebildet, so dass bei Verstellung der Führungselemente 3 bzw. 3' und mittels des Spiels in der Nut 23 bzw. 23' der jeweilige Kurvenradius an einen gewünschten Soll-Radius angenähert werden kann. Zusätzliche Verbindungsstreifen sind, wie bei aus dem Stand der Technik bekannten Ausführungsformen, nicht notwendig, so dass eine Neupositionierung der Führungselemente 3 und 3' gemäß Ausführungsbeispiel der Fig. 2 einfach und zeitsparend durchgeführt werden kann. Die Verbindung der Stützschuhe 16 bzw. 16' mit dem jeweiligen Führungselementen 3 bzw. 3' durch eine im Führungselement 3 bzw. 3' befindliche Nut 23 bzw. 23' ermöglicht zudem den einfachen Austausch der Führungselemente 3 bzw. 3', bspw. bei Verschleißerscheinungen.

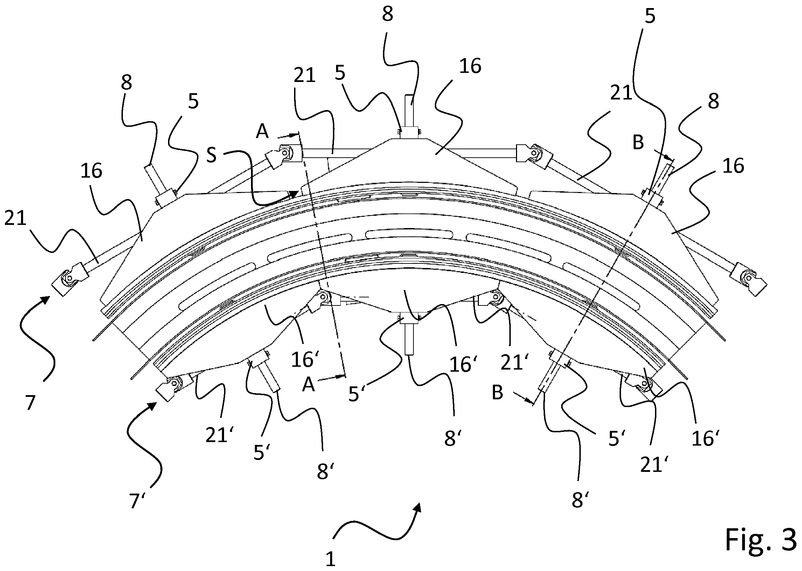

Die Position der Stützschuhe 16 bzw. 16' sowie der resultierende technische Effekt bei Verbindung mit dem jeweiligem elastisch ausgebildetem Führungselement 3 bzw. 3' wird nochmals in der Draufsicht aus **Fig. 3** verdeutlicht.

So ist bei eingenommener Position der Stützschuhe 16 in Fig. 3 zwischen benachbarten Stützschuhen 16 jeweils ein Spalt S ausgebildet. Bei aus dem Stand der Technik bekannten Ausführungsformen sind die jeweiligen Führungselemente durch Segmente gebildet, so dass ein entstehender Spalt S durch Verbindungsleisten geschlossen werden muss.

Beim Ausführungsbeispiel aus den Figuren 2 und 3 erstrecken sich die Führungselemente 3 bzw. 3' über den gesamten Transportabschnitt und sind elastisch ausgebildet. Durch eine Bewegung der Stützschuhe 16 bzw. 16' in Längsrichtung ihrer jeweiligen zugeordneten Zahnstange 8 bzw. 8' kann das jeweilige Führungselement 3 bzw. 3' unter Anlage mit einer Kontaktfläche des jeweiligen Stützschuhs 16 bzw. 16' und über den ggf. resultierenden Spalt S elastisch verformt werden, wobei der Verlauf des jeweiligen Führungselementes 3 bzw. 3' an einen Soll-Kurvenradius zumindest angenähert wird.

Fig. 3 lässt darüber hinaus erkennen, dass jedem ersten Stützschuh 16 auf einer gegenüberliegenden Seite der Transportstrecke jeweils ein zweiter Stützschuh 16' zugeordnet ist. Die Stützschuhe 16 und 16' sind daher paarweise entlang der Transportstrecke für die Artikel angeordnet. Die Anzahl der Stützschuhe 16 sowie der jeweiligen Verstellelemente 5, die mit dem ersten Führungselement 3 in Wirkverbindung gebracht sind ist somit identisch zur Anzahl der Stützschuhe 16' sowie der jeweiligen Verstellelemente 5', die mit dem zweiten Führungselement 3' in Verbindung gebracht sind, ausgebildet.

Die Darstellung der Fig. 4 zeigt einen schematischen Querschnitt durch die Ausführungsform aus den Figuren 2 und 3 entlang der Linie A aus Fig. 3. Im Querschnitt der Fig. 4 sind nochmals die Standbeine 19 für den Transportabschnitt 1 zu erkennen, die über Schraubverbindungen an einer Außenseite des Maschinenrahmens 10 fixiert sind. Weiter die Zahnstangen 8 der Verstellelemente 5, deren Hub und Rückhub senkrecht zur Transportauflage 6 orientiert ist. Der Querschnitt der Kardanwellen 21 bzw. 21' ist vorliegend kreisrund ausgebildet. Wie vorherig bereits erwähnt, ist in diversen bevorzugten Ausführungsformen vorstellbar, dass die Kardanwellen 21 bzw. 21 einen elliptischen oder polygonen Querschnitt besitzen.

Weiter zeigt Fig. 4 eine Ausführungsform für einen Tragarm 14 bzw. 14, welcher zur Verbindung des jeweiligen Verstellelementes 5 bzw. 5' mit dem Maschinenrahmen 10 ausgebildet ist. Gegensätzliche zum Ausführungsbeispiel aus Fig. 1 besitzen die Tragarme 14 bzw. 14' im Querschnitt der Fig. 5 einen geschwungenen Verlauf. Es kann zudem sein, dass die Tragarme 14 bzw. 14' einen Längsschlitz L (vgl. Fig. 7) aufweisen, durch welchen ein oder mehrere Fixiermittel - bspw. Schraubverbindungen - greifen. Vorteilhafterweise ist das jeweilige dem Tragarm 14 bzw. 14' zugeordnete Verstellelement 5 bzw. 5' hierdurch in unterschiedlichen vertikalen Niveaus am Maschinenrahmen 10 fixierbar.

Die Darstellung der Fig. 5 zeigt einen weiteren schematischen Querschnitt durch die Ausführungsform aus den Figuren 2 bis 4 entlang der Linie B aus Fig. 3. Zu erkennen sind im Querschnitt aus Fig. 5 nochmals die Nut 23 des ersten Führungselementes 3 sowie die Nut 23' des zweiten Führungselementes 3'. Weiter die Zahnstangen 8 sowie 8' die durch das jeweilige Verstellelement 5 bzw. 5' greifen. Die Verstellelemente 5 bzw. 5' sind in Fig. 5 lediglich schematisch dargestellt und gemäß Ausführungsbeispiel aus Fig. 7 ausgebildet.

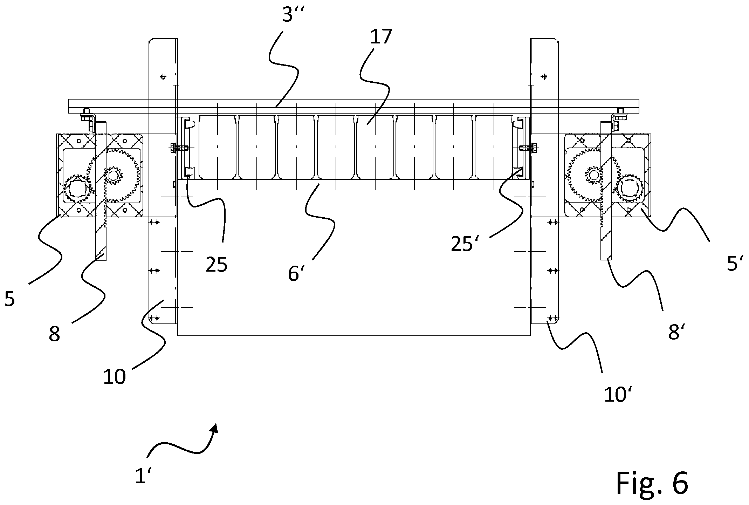

Die schematische Perspektivansicht der Fig. 6 zeigt eine weitere Ausführungsform eines weiteren erfindungsgemäßen Transportabschnittes 1', welcher nicht zur Erfindung gehört. Der in der Fig. 6 schematisch angedeutete Transportabschnitt 1' ist ausgebildet zur Beförderung von Dosen 17, die vorliegend im ungefüllten Zustand stehend auf einer Transportauflage 6' mittels Druckluft fortbewegt werden. Gezeigt ist im Ausführungsbeispiel der Fig. 6 eine Beförderung, bei welcher die Dosen 17 mehrreihig und geordnet bewegt werden. Denkbar sind jedoch auch Ausführungsformen, bei welchen sich die Dosen 17 im ungeordneten Massenstrom bewegen.

Da die Dosen 17 keine Befüllung aufweisen, ergibt sich bei Beförderung mittels Druckluft das Problem, dass die Dosen 17 aufgrund geringer Masse nicht stabil auf der Transportauflage 6 aufstehen würden.

Daher ist ein Führungselement 3" vorgesehen, das zumindest annäherungsweise parallel zur Transportauflage 6' orientiert oberhalb der Dosen 17 und entlang ihrer Bewegungsbahn angeordnet ist. Werden die Dosen 17 über Druckluft geführt, so kann deren vertikale Bewegungsfreiheit bei Abheben von der Transportauflage 6 über das Führungselement 3" begrenzt werden.

Der Abstand zwischen dem Führungselement 3" und der Transportauflage 6' entspricht vorliegend etwas mehr als der maximalen vertikalen Erstreckung der Dosen 17', vorteilhaft ist der Abstand um 1 bis 5 mm höher als die maximale vertikale Erstreckung der Dosen, besonders vorteilhaft liegt der Abstand bei etwa 1 bis 3 mm darüber.

Um die seitliche Bewegungsfreiheit der Dosen 17 bei Transport zu begrenzen, verfügt der Transportabschnitt 1 über mehrere sich parallel und in Transportrichtung der Dosen 17 erstreckende Wandabschnitte 25 und 25', die an einem Maschinenrahmen 10' befestigt sind. Die Wandabschnitte 25 und 25' sind weiterhin senkrecht zur Transportauflage 6 und senkrecht zum Führungselement 3" orientiert.

Der relative Abstand des Führungselementes 3" zur Transportauflage 6' ist über wenigstens ein erstes Verstellelement 5 und wenigstens ein zweites Verstellelement 5' vorgebbar. Um den sicheren Transport der Dosen 17 gewährleisten zu können, muss der relative Abstand des Führungselementes 3" zur Transportauflage 6' möglichst genau eingestellt werden können, da ein zu großer Abstand zu einer Desorientierung oder entstehenden Unordnung der Dosen 17 führen kann und die Dosen 17 bei zu kleinem Abstand zwischen der Transportauflage 6' und dem Führungselement 3" geklemmt werden.

Aus diesem Grunde verfügen die Verstellelemente 5 und 5' zur feinfühligen Handhabung über mehrere Übersetzungsstufen 18, die detailliert in nachfolgender Fig. 7 dargestellt sind.

Vorstellbar ist bspw., dass mehrere erste Verstellelemente 5 auf einer ersten Seite des Transportabschnittes 1' mit dem Führungselement 3" in Verbindung stehen können. Ggf. können die mehreren ersten Verstellelemente 5 über ein gemeinsames Betätigungsglied 7 bzw. eine gemeinsame Antriebswelle 9, wie im Ausführungsbeispiel der Fig. 1 dargestellt, miteinander in Verbindung stehen. Zudem können auf einer weiteren gegenüberliegenden Seite des Transportabschnittes 1 mehrere zweite Verstellelemente 5' mit dem Führungselement 3" in Verbindung stehen. Ebenso können die zweiten Verstellelemente 5' ggf. über ein gemeinsames weiteres Betätigungsglied 7' bzw. eine weitere gemeinsame Antriebswelle 9', wie im Ausführungsbeispiel der Fig. 1 dargestellt, miteinander in Verbindung stehen.

Wie in Fig. 6 zudem zu erkennen, sind die Zahnstangen 8 und 8' der Verstellelemente 5 und 5' jeweils senkrecht zur Transportauflage 6 und senkrecht zum Führungselement 3" orientiert. Der Hub und Rückhub der Zahnstangen 8 und 8' zum Heben und Senken des Führungselementes 3" erfolgt somit in Richtung senkrecht zur Transportauflage 6'.

Da das Führungselement 3" fest mit den beiden Zahnstangen 8 und 8' verbunden ist, erfolgt die Neupositionierung des Führungselementes 3" durch ein synchrones Heben und Senken mittels beider erster und zweiter Verstellelemente 5 und 5'. Das Führungselement 3" ist somit bei Heben und Senken mittels der jeweiligen Verstellelemente 5 und 5' stets parallel zur Transportauflage 6' orientiert.

Zur Befestigung sind die Verstellelemente 5 und 5'mit dem Maschinenrahmen 10 verbunden. Beispielsweise können die Verstellelemente 5 und 5' mit dem Maschinenrahmen 10 verschraubt sein, auch eignen sich Verbindung mit einem Tragarm 14, wie er beispielhaft in den Figuren 1, 4 und 5 zu erkennen ist.

Schließlich zeigt die Fig. 7 eine weitere schematische Perspektivansicht eines Verstellelementes 5, wie es für diverse Ausführungsform eines erfindungsgemäßen Transportabschnittes 1 bzw. 1', insbesondere für Ausführungsformen gemäß Figuren 1 bis 6, Verwendung finden kann. Das Verstellelement 5 überträgt einen rotatorischen Antrieb über die Übersetzungsstufen 18 auf eine lineare Stellbewegung des jeweiligen Führungselementes 3 bzw. 3' (vgl. Figuren 1 bis 6). Durch die Übersetzungsstufen 18 kann bei Betätigung des Drehantriebs und hieraus resultierender linearer Stellbewegung des Verstellelementes 5 eine sehr genaue Anpassung der jeweiligen Position des verstellbaren Führungselementes 3 bzw. 3' erfolgen

Zur Befestigung des Verstellelementes 5 an einem Gestell oder einem entsprechenden Maschinenrahmen 10 des jeweiligen Transportabschnittes 1 bzw. 1'ist ein Tragarm 14 vorgesehen. Der Tragarm 14 umfasst einen Längsschlitz L, durch welchen Fixiermittel wie Schraubverbindungen geführt sein können, um das Verstellelement 5 auf dem gewünschten vertikalen Niveau am Maschinenrahmen 10 bzw. am Gestell festzusetzen. Der Tragarm 14 umgreift das Gehäuse 27 des Verstellelementes 5 und besitzt Bohrungen, die mit weiteren Bohrungen des Gehäuses 27 fluchten und durch welche Bohrungen Schraubverbindungen 28 zur Fixierung des Tragarmes 14 an dem Gehäuse 27 des Verstellelementes 5 geführt sind.

Weiter ist das Gehäuse 27 aus einem ersten Teil 29 und einem zweiten Teil 29' gebildet, welcher erste Teil 29 und welcher zweite Teil 29' ebenso über die Schraubverbindungen 28 aneinander fixiert sind. Das Gehäuse 27 schützt die Übersetzungsstufen 18 vor Verunreinigungen und kann bspw. durch Kunststoff oder Metall ausgebildet sein. Durch die einfache Fixierung der beiden Gehäusehälften 29 und 29' über Schraubverbindungen kann bei Beschädigung oder Verschleiß einer oder mehrerer Komponenten der Übersetzungsstufen 18 ein einfaches Trennen der beiden Gehäusehälften 29 und 29' durch Öffnen der Schraubverbindungen 28 mit anschließendem Austausch der jeweiligen Komponente erfolgen.

Die Übersetzungsstufen 18 umfassen ein Antriebsmittel 30 mit Außenverzahnung sowie ein rotierendes Übertragungsmittel 32, das mit dem Antriebsmittel 30 kämmend in Eingriff steht. Das Antriebsmittel 30 und das Übertragungsmittel 32 rotieren gegensinnig. Da die Zahnzahl des Übertragungsmittels gegenüber der Zahnzahl des Antriebsmittels vergrößert ausgebildet ist, besitzt das Antriebsmittel 30 gegenüber dem Übertragungsmittel 32 eine höhere Drehfrequenz. In bevorzugten Ausführungsformen beträgt zur Verbesserung der Feinfühligkeit bei Neupositionierung der jeweiligen Führungselemente 3 bzw. 3' die Zahnzahl des Übertragungsmittels 32 mindestens das 1,5-fache der Zahnzahl des Antriebsmittels 30 und besonders vorteilhaft in etwa das 2-fache der Zahnzahl des Antriebsmittels 30.

Weiter ist zu erkennen, dass das Verstellelement 5 eine Zahnstange 8 umfasst, um die lineare Stellbewegung auf das jeweilige verstellbare Führungselement 3 bzw. 3' zu übertragen. Die Zahnstange 8 ist mit einem in Fig. 7 nicht erkennbaren und durch das Übertragungsmittel 32 verdeckten Abtriebsmittel kämmend in Eingriff gebracht. Das Abtriebsmittel ist als Zahnrad ausgebildet und sitzt zusammen mit dem Übertragungsmittel 32 drehfest auf der Welle 35 auf, wobei das Abtriebsmittel und das Übertragungsmittel 32 vorteilhaft einteilig ausgeführt sind. Weiter ist die Zahnstange 8 durch das Gehäuse 27 geführt und wird durch das Gehäuse 27 mitgetragen.

Die Zahnstange 8 besitzt lediglich in definierten Bereichen eine Verzahnung Z. Der Hub und Rückhub, welche die Zahnstange 8 des Verstellelementes 5 ausführen kann, ist durch die bereichsweise Verzahnung Z der Zahnstange 8 begrenzt. Weiter besteht in der Praxis die Möglichkeit, durch die bereichsweise Verzahnung Z der Zahnstange 8 definierte Endlagen für die Zahnstange 8 und somit für das mit der Zahnstange 8 gekoppelte Führungselement 3 bzw. 3' vorzugeben.

Um das Verstellelement 5 sowie seine Übersetzungsstufen 18 möglichst verschleißreduziert betreiben zu können, sind das Antriebsmittel 30 sowie das Übertragungsmittel 32 durch unterschiedliche Materialien ausgebildet. Vorliegend ist das Antriebsmittel 30 aus Metall ausgebildet, das Übertragungsmittel 32 aus Kunststoff. Sofern eine Schmierung notwendig ist, kann Schmiermittel auf die Zahnstange 8 aufgebracht werden, welches Schmiermittel durch die Hub und Rückhubbewegung der Zahnstange 8 in das Gehäuse 27 eintreten kann.

Um die Feinfühligkeit weiter zu erhöhen, kann das als rotierende Zahnrad ausgebildete Abtriebsmittel, welches vorliegend durch das Übertragungsmittel 32 überdeckt wird und gemeinsam drehfest mit dem Übertragungsmittel 32 auf der Welle 35 aufsitzt, eine Zahnzahl aufweisen, die geringer als die Zahnzahl des Antriebsmittel 30 ausgebildet ist. Da das als Zahnrad ausgebildete Abtriebsmittel sowie das Übertragungsmittel 32 drehfest auf der Welle 35 aufsitzen, besitzen das als Zahnrad ausgebildete Abtriebsmittel und das Übertragungsmittel 32 eine identische Drehfrequenz.

Weiter ist in Fig. 7 zu erkennen, dass der erste Teil 29 des Gehäuses 27 mehrere Nuten besitzt (vorliegend zwei Nuten erkennbar) und der zweite Teils des Gehäuses 27 mehrere zu den Nuten korrespondierend ausgebildete Vorsprünge 37 besitzt, die formschlüssig in die Nuten eingreifen. Hierdurch kann ein passgenaues Ausrichten der beiden Gehäusehälften 29 und 29' bei Aufsetzen bewirkt werden.

Beide Gehäusehälften 29 und 29' besitzen jeweils zwei Tragringe, wobei jeweils ein erster Tragring der Gehäusehälften 29 und 29' zur drehbeweglichen Lagerung des Antriebsmittel 30 vorgesehen ist und jeweils ein zweiter Tragring der Gehäusehälften zur drehbeweglichen Lagerung der Welle 35 mit Übertragungsmittel 32 und als Zahnrad ausgebildetem Abtriebsmittel vorgesehen ist. Sofern das Gehäuse 27 aus Kunststoff ausgebildet ist, können die Lagerungen als Bestandteil des Gehäuses 27 ausgebildet und mit dem Gehäuse 27 im Spritzgussverfahren hergestellt sein.

Weiterhin besitzt das Antriebsmittel 30 eine Öffnung 40, durch welche ein Betätigungsglied 7 bzw. eine Welle 9 oder eine Kardanwelle 21 formschlüssig eintaucht und das Antriebsmittel 30 rotierend bewegt. Der in Fig. 7 dargestellte quadratische Querschnitt der Öffnung ist beispielhaft zu verstehen, so dass in weiteren Ausführungsformen bspw. weitere polygone oder elliptische Querschnitte zur formschlüssigen Aufnahme des jeweiligen Betätigungsgliedes 7 Verwendung finden können.

Das Gehäuse 27 besitzt zudem mehrere in Fig. 7 nicht erkennbare Öffnungen, durch welche flüssiges Medium aus dem Inneren des Gehäuses 27 nach Außen abführbar ist. Insbesondere nach Reinigungsvorgängen kann ein derartiges Abführen von Flüssigkeiten aus dem Gehäuse 27 wünschenswert sein, um Korrosion der Übersetzungsstufen 18 zu verhindern.

Es sei abschließend darauf hingewiesen, dass die Erfindung unter Bezugnahme auf bevorzugte Ausführungsformen beschrieben wurde. Es ist jedoch für einen Fachmann vorstellbar, dass Abwandlungen oder Änderungen der Erfindung im Rahmen der jeweils geltenden Ansprüche möglich sind und gemacht werden können, ohne dass dabei der Schutzbereich der nachstehenden Ansprüche verlassen wird.

### Bezugszeichenliste

- 1: Transportabschnitt
- 3: Führungselement
- 5: Verstellelement
- 6: Transportauflage
- 7: Betätigungsglied
- 8: Zahnstange
- 9: Welle
- 10: Maschinenrahmen
- 12: Trennwand
- 13: Distanzstück
- 14: Tragarm
- 15: Flasche
- 16: Stützschuh
- 17: Dose
- 18: Übersetzungsstufen
- 19: Standbein
- 21: Kardanwelle
- 23: Nut
- 25: Wandabschnitt
- 27: Gehäuse
- 28: Schraubverbindungen
- 29: Gehäusehälfte
- 30: Antriebsmittel
- 32: Abtriebsmittel
- 35: Welle
- 37: Vorsprung
- 40: Öffnung

- L: Längsschlitz
- S: Spalt
- Z: Verzahnung

## Patentansprüche

1. Transportabschnitt (1) einer Horizontalfördereinrichtung zur Beförderung von Artikeln wie Flüssigkeitsbehältern oder Flaschen (15), die stehend oder hängend auf einer sich in horizontaler Förderrichtung erstreckenden Transportauflage (6) zwischen zwei ungefähr parallel in einem mindestens der Artikel- oder Behälterbreite entsprechenden Abstand angeordneten Führungselementen (3, 3') bewegt werden, wobei zumindest eines der beiden gegenüber liegend angeordneten Führungselemente (3, 3') über mehrere, an einem Maschinenrahmen (10) oder Gestell verankerte Verstellelemente (5, 5') quer zur Förderrichtung in seinem Abstand zum anderen Führungselement (3, 3') verstellbar ist, welche Verstellelemente (5, 5') über einen gemeinsamen Drehantrieb miteinander gekoppelt und annähernd synchronisiert sind, wobei jedes Verstellelement (5, 5') einen rotatorischen Antrieb des gemeinsamen Drehantriebs über eine oder mehrere Übersetzungsstufen (18) auf eine lineare Stellbewegung des daran aufgehängten Führungselements (3, 3') überträgt, **dadurch gekennzeichnet, dass** die ein oder mehreren Übersetzungsstufen (18) der Verstellelemente jeweils umfassen:
- mindestens ein an den Drehantrieb gekoppeltes und über den Drehantrieb rotierend antreibbares Antriebsmittel (30) mit Außenverzahnung und erster Zahnzahl n1 und
- mindestens ein dem Antriebsmittel (30) nachgeordnetes, drehendes und mit dem Antriebsmittel (30) in kämmendem Eingriff stehendes Übertragungsmittel (32) mit Außenverzahnung und zweiter Zahnzahl n2,
wobei die zweite Zahnzahl n2 des Übertragungsmittels (32) mindestens der 1,5-fachen Zahnzahl n1 des Antriebsmittels entspricht, wobei die Verstellelemente (5, 5') jeweils wenigstens eine Zahnstange (8, 8') aufweisen und die Übersetzungsstufen (18) jeweils wenigstens ein als rotierendes Zahnrad ausgebildetes Abtriebsmittel besitzen, das zur linearen Stellbewegung der Zahnstange (8, 8') kämmend mit der Zahnstange (8, 8') in Eingriff steht und wobei das wenigstens eine als rotierendes Zahnrad ausgebildete Abtriebsmittel und das Übertragungsmittel (32) drehfest miteinander gekoppelt sind und eine gemeinsame Drehachse aufweisen,
wobei das wenigstens eine verstellbare Führungselement (3, 3') einen kurvenförmigen Verlauf beschreibt und flexibel ausgebildet ist, wobei bei einer Änderung seines Abstandes zum anderen Führungselement (3, 3') der Radius des kurvenförmigen Verlaufs über die jeweiligen mehreren Verstellelemente (5, 5') durch eine elastische Verformung des flexiblen Führungselementes (3, 3') anpassbar ist und
wobei die lineare Stellbewegung des jeweiligen Verstellelementes (5, 5') auf jeweils einen zugeordneten und mit dem Führungselement (3, 3') gekoppelten Stützschuh (16, 16') übertragbar ist bzw. übertragen wird, welcher Stützschuh (16, 16') jeweils eine mit dem Führungselement (3, 3') in Anlage gebrachte Kontaktfläche aufweist, die dem Verlauf des Führungselementes (3, 3') zumindest annäherungsweise folgt.

2. Transportabschnitt nach Anspruch 1, bei dem das wenigstens eine als rotierendes Zahnrad ausgebildete Abtriebsmittel eine dritte Zahnzahl n3 aufweist, die kleiner ist als die Zahnzahl n1 des Antriebsmittels (30).

3. Transportabschnitt nach Anspruch 1 oder Anspruch 2, bei dem die Verstellelemente (5, 5') zur vollständigen Aufnahme der Übersetzungsstufen (18) jeweils ein mindestens zweiteilig ausgebildetes Gehäuse (27) aufweisen, wobei der jeweils erste Teil (29) des Gehäuses (27) ein oder mehrere Nuten besitzt und der jeweils zweite Teil (29') des Gehäuses (27) jeweils ein oder mehrere zu den Nuten korrespondierend ausgebildete Vorsprünge (37) umfasst, die bei verbundenem erstem und zweitem Teil (29, 29') vorzugsweise formschlüssig in die Nuten des jeweils ersten Teils (29) eingreifen.

4. Transportabschnitt nach Anspruch 3, bei dem das mindestens zweiteilig ausgebildete Gehäuse (27) wenigstens jeweils eine Lagerung für das Antriebsmittel (30) und/oder das Übertragungsmittel (32) und/oder die Zahnstange (8, 8') und/oder das als Zahnrad ausgebildete Abtriebsmittel aufweist.

5. Transportabschnitt nach Anspruch 3 oder 4, bei dem das Gehäuse (27) an seiner unteren Seite ein oder mehrere Öffnungen besitzt, durch welche flüssiges Medium aus dem Inneren des Gehäuses (27) nach Außen abführbar ist.

6. Transportabschnitt nach einem der Ansprüche 1 bis 5, bei dem sämtliche Verstellelemente (5, 5'), die zur Verstellung des jeweiligen Führungselementes (3, 3') vorgesehen sind, durch ein gemeinsames und rotierendes Betätigungsglied (7, 7') mit dem jeweiligen Drehantrieb in Wirkverbindung stehen.

7. Transportabschnitt nach Anspruch 6, bei dem das Betätigungsglied (7, 7') durch mehrere Kardanwellen (21, 21') gebildet ist, wobei jedem der Verstellelemente (5, 5') eine eigene der Kardanwellen (21, 21') zugeordnet ist und jeweils benachbarte Kardanwellen (21, 21') drehfest miteinander gekoppelt sind.

8. Transportabschnitt nach einem der Ansprüche 1 bis 7, bei dem das wenigstens eine verstellbare Führungselement (3, 3') eine Nut (23, 23') aufweist, in welcher die jeweiligen Stützschuhe (16, 16') zum verschiebbaren Halten des Führungselementes (3, 3') geführt sind.

9. Transportabschnitt nach einem der Ansprüche 1 bis 8, bei dem beide der zwei ungefähr parallel angeordneten Führungselemente (3, 3') über jeweils mehrere Verstellelemente (5, 5') quer zur Förderrichtung in ihrem jeweiligen Abstand zum anderen Führungselement (3, 3') verstellbar sind.

## Claims

1. A transport section (1) of a horizontal conveying device used to convey articles, such as liquid containers or bottles (15), which are moved along in a standing or hanging position on a transport support surface (6) extending in horizontal conveying direction between two guide elements (3, 3'), which are arranged approximately parallel to each other and spaced apart at a distance corresponding to at least the article width or container width, wherein at least one of the two guide elements (3, 3') arranged facing each other is adjustable transverse to the conveying direction in its distance to the other guide element (3, 3') by way of a plurality of adjustment elements (5, 5') anchored to a machine frame (10) or base frame, which adjustment elements (5, 5') are coupled with each other via a common rotary drive and are approximately synchronized, wherein each adjustment element (5, 5') transmits a rotatory impulse of the common rotary drive via one or more transmission steps (18) to a linear adjustment movement of the guide element (3, 3') linked thereto, **characterised in that** the one or more transmission steps (18) of the adjustment elements in each instance comprise:
- at least one input means (30) with external teeth and a first number of teeth n1, said input means (30) being coupled with and rotatably drivable by the rotary drive and
- at least one rotating transmission means (32) with external teeth and a second number of teeth n2, said transmission means (32) being arranged downstream of the input means (30) and designed to intermesh comb-like with the input means (30),
wherein the transmission means (32) has a second number of teeth n2 that is at least 1.5 times the number of teeth n1 of the input means (30); wherein the adjustment elements (5, 5') in each instance have at least one gear rack (8, 8') and the transmission steps (18) each have at least one output means designed as rotary gear wheel, said output means intermeshing for the linear adjustment movement of the gear rack (8, 8') in a comb-like engagement with the gear rack (8, 8'); and wherein the at least one output means designed as a rotary gear wheel and the transmission means (32) are coupled with each other in a non-rotating manner and have a common axis of rotation;
wherein the at least one adjustable guide element (3, 3') describes a curved path and is designed to be flexible, wherein, upon a change of the distance of the guide element (3, 3') to the other guide element (3, 3'), the radius of the curved path is adaptable by way of the particular plurality of adjustment elements (5, 5') by an elastic deformation of the flexible guide element (3, 3'); and
wherein the linear adjustment movement of the particular adjustment element (5, 5') is transmittable or transmitted , as the case may be, to in each instance one associated support shoe (16, 16') coupled with the guide element (3, 3'), which support shoe (16, 16') in each instance has a contact surface that is brought to abut on the guide element (3, 3') and that at least approximately follows the path of the guide element (3, 3').

2. The transport section according to claim 1, in which the at least one output means designed as rotary gear wheel has a third number of teeth n3, with n3 being smaller than the number of teeth n1 of the input means (30).

3. The transport section according to claim 1 or claim 2, in which the adjustment elements (5, 5') in each instance have a casing (27) formed of at least two parts for the purpose of fully accommodating the transmission steps (18), and wherein the in each instance first part (29) of the casing (27) has one or more grooves and the in each instance second part (29') of the casing (27) in each instance comprises one or more projections (37) formed to correspond to the grooves and to engage preferably in a form-fitting manner with the grooves of the in each instance first part (29) when the first and second parts (29, 29') are connected.

4. The transport section according to claim 3, in which the at least two-part casing (27) has in each instance at least one bearing for the input means (30) and/or the for transmission means (32) and/or for the gear rack (8, 8') and/or for the output means designed as gear wheel.

5. The transport section according to claim 3 or 4, in which the casing (27) has one or more openings on its underside, through which openings a liquid medium is dischargeable from the inside of the casing (27) to the outside.

6. The transport section according to one of the claims 1 to 5, in which all adjustment elements (5, 5') provided for the adjustment of the particular guide element (3, 3') are in an operative connection with the particular rotary drive by way of a common and rotating actuating member (7, 7').

7. The transport section according to claim 6, in which the actuating member (7, 7') is formed by a plurality of cardan shafts (21, 21'), wherein each of the adjustment elements (5, 5') is assigned an own cardan shaft (21, 21') and in each instance adjacent cardan shafts (21, 21') are coupled with each other in a non-rotating manner.

8. The transport section according to one of the claims 1 to 7, in which the at least one adjustable guide element (3, 3') has a groove (23, 23'), in which the particular support shoes (16, 16') are guided for the shiftable support of the guide element (3, 3').

9. The transport section according to one of the claims 1 to 8, in which both of the two approximately parallel-arranged guide elements (3, 3') are in each instance adjustable transverse to the conveying direction in their particular distance to the other guide element (3, 3') by way of a plurality of adjustment elements (5, 5').

## Revendications

1. Section de transport (1) d'un dispositif de transport horizontal destiné à transporter des articles tels que récipients de liquide ou bouteilles (15) qui sont déplacés debout ou de manière suspendue sur un support de transport (6) s'étendant dans la direction de transport horizontale, entre deux éléments de guidage (3, 3') disposés à peu près parallèlement à une distance correspondant au moins à la largeur d'article ou de récipient, dans lequel l'un au moins des deux éléments de guidage (3, 3') disposés en regard l'un de l'autre peut être réglé, par l'intermédiaire de plusieurs éléments de réglage (5, 5 ') ancrés sur un châssis de machine (10) ou bâti, transversalement à la direction de transport quant à sa distance par rapport à l'autre élément de guidage (3, 3'), lesquels éléments de réglage (5, 5') sont couplés les uns aux autres et approximativement synchronisés par un entraînement rotatif commun, dans laquelle chaque élément de réglage (5, 5') transmet un entraînement rotatif de l'entraînement rotatif commun par un ou plusieurs étages de transmission (18) à un mouvement de réglage linéaire de l'élément de guidage (3, 3') y suspendu, **caractérisée par le fait que** ledit un ou les plusieurs étage(s) de transmission (18) des éléments de réglage comprennent chacun:
- au moins un moyen d'entraînement (30) qui est couplé à l'entraînement rotatif et peut être entraîné en rotation par ledit entraînement rotatif et qui comprend une denture extérieure et un premier nombre de dents n1, et
- au moins un moyen de transmission (32) rotatif qui est disposé en aval du moyen d'entraînement (30) et s'engrène avec le moyen d'entraînement (30) et qui présente une denture extérieure et un deuxième nombre de dents n2,
dans laquelle le deuxième nombre de dents n2 du moyen de transmission (32) correspond à au moins 1,5 fois le nombre de dents n1 du moyen d'entraînement, dans lequel les éléments de réglage (5, 5') présentent chacun au moins une crémaillère (8, 8') et les étages de transmission (18) présentent chacun au moins un moyen de sortie qui est conçu en tant que roue dentée rotative et qui s'engrène avec la crémaillère (8, 8') pour le mouvement de réglage linéaire de la crémaillère (8, 8'), et dans laquelle ledit au moins un moyen de sortie qui est conçu en tant que roue dentée rotative et le moyen de transmission (32) sont couplés entre eux de manière solidaire en rotation et présentent un axe de rotation commun,
dans laquelle ledit au moins un élément de guidage (3, 3') réglable décrit un tracé courbe et est conçu de manière à être flexible, dans laquelle, dans le cas d'un changement de sa distance par rapport à l'autre élément de guidage (3, 3'), le rayon du tracé courbe sur les plusieurs éléments de réglage (5, 5 ') respectifs peut être adapté par une déformation élastique de l'élément de guidage (3, 3') flexible, et
dans laquelle le mouvement de réglage linéaire de l'élément de réglage 5, 5') respectif peut être ou bien est transmis respectivement à un patin de support (16, 16') associé et couplé à l'élément de guidage (3, 3 '), lequel patin de support (16, 16') présente respectivement une surface de contact qui est mise en contact avec l'élément de guidage (3, 3') et qui suit au moins approximativement le tracé de l'élément de guidage (3, 3').

2. Section de transport selon la revendication 1, dans laquelle ledit au moins un moyen de sortie conçu en tant que roue dentée rotative comprend un troisième nombre de dents n3 qui est inférieur au nombre de dents n1 du moyen d'entraînement (30).

3. Section de transport selon la revendication 1 ou la revendication 2, dans laquelle les éléments de réglage (5, 5') présentent chacun un boîtier (27) en au moins deux parties pour recevoir entièrement les étages de transmission (18), dans laquelle la première partie (29) du boîtier (27) présente une ou plusieurs rainure(s), et la deuxième partie (29') respective du boîtier (27) présente respectivement une ou plusieurs projection(s) (37) qui sont réalisées de manière correspondante aux rainures et qui, lorsque les première et deuxième parties (29, 29') sont reliées, se prennent de préférence à engagement positif dans les rainures de la première partie (29) respective.

4. Section de transport selon la revendication 3, dans laquelle le boîtier (27) réalisé en au moins deux parties présente au moins respectivement un palier pour le moyen d'entraînement (30) et/ou le moyen de transmission (32) et/ou la crémaillère (8, 8') et/ou le moyen de sortie conçu en tant que roue dentée.

5. Section de transport selon la revendication 3 ou 4, dans laquelle le boîtier (27) présente une ou plusieurs ouverture(s) sur sa face inférieure, à travers lesquelles du milieu liquide peut être évacué de l'intérieur du boîtier (27) vers l'extérieur.

6. Section de transport selon l'une quelconque des revendications 1 à 5, dans laquelle l'ensemble des éléments de réglage (5, 5') qui sont prévus pour régler l'élément de guidage (3, 3') respectif sont en liaison active avec l'entraînement rotatif respectif par un élément d'actionnement (7, 7') commun et rotatif.

7. Section de transport selon la revendication 6, dans laquelle l'élément d'actionnement (7, 7') est formé par une pluralité d'arbres à cardan (21, 21'), à chacun des éléments de réglage (5, 5') étant associé un propre arbre à cardan (21, 21'), et des arbres à cardan (21, 21') respectivement voisins étant couplés les uns aux autres de manière solidaire en rotation.

8. Section de transport selon l'une quelconque des revendications 1 à 7, dans laquelle ledit au moins un élément de guidage (3, 3') réglable présente une rainure (23, 23') dans laquelle sont guidés les patins de support (16, 16') respectifs pour maintenir de manière déplaçable l'élément de guidage (3, 3').

9. Section de transport selon l'une quelconque des revendications 1 à 8, dans laquelle les deux des deux éléments de guidage (3, 3') disposés à peu près parallèlement sont réglables, respectivement par l'intermédiaire de plusieurs éléments de réglage (5, 5'), transversalement à la direction de transport quant à leur distance respective par rapport à l'autre élément de guidage (3, 3').
